# EUROPEAN PATENT SPECIFICATION

(11) **EP 4 561 036 B1**
(45) Date of publication and mention of the grant of the patent: **23.09.2026**
(21) Application number: 23922404.1
(22) Date of filing: 17.11.2023
(51) Int. Cl.: H04M 1/02, F16C 11/04, G06F 1/16

(54) **ROTATING SHAFT STRUCTURE AND FOLDING TERMINAL**
DREHWELLENSTRUKTUR UND KLAPPENDGERÄT
STRUCTURE D'ARBRE ROTATIF ET TERMINAL REPLIABLE

(30) Priority: 16.02.2023 CN 202310165524
(43) Date of publication of application: 28.05.2025
(73) Proprietor: Honor Device Co., Ltd., Shenzhen, Guangdong 518040 (CN)
(72) Inventor: SU, Shuai, Shenzhen, Guangdong 518040 (CN); CHEN, Ruihao, Shenzhen, Guangdong 518040 (CN); DONG, Changfu, Shenzhen, Guangdong 518040 (CN); DONG, Shaohong, Shenzhen, Guangdong 518040 (CN); HUANG, Jian, Shenzhen, Guangdong 518040 (CN)
(74) Representative: Isarpatent
(86) International application number: PCT/CN2023/132197
(87) International publication number: WO 2024/169288

(56) References cited:
- EP-A1- 3 876 504
- EP-A1- 4 072 110
- EP-A1- 4 300 254
- WO-A1-2022/052721
- WO-A1-2022/199493
- CN-A- 114 810 803
- CN-A- 115 539 496
- CN-U- 211 702 093
- CN-U- 218 041 429
- KR-A- 20210 047 389

## Description

### TECHNICAL FIELD

This application relates to the field of electronic device technologies, and in particular, to a rotating shaft structure and a foldable terminal.

### BACKGROUND

With constant development of display technologies, foldable terminals (for example, foldable mobile phones) gradually become a future development trend of mobile electronic products. The foldable terminals can have a larger display area in an unfolded state, improving a visual effect, and can have a smaller volume in a folded state, facilitating carrying by users, and therefore, are increasingly favored by more users.

A structure for implementing folding and unfolding of a foldable terminal is a rotating shaft structure. The rotating shaft structure includes a damping mechanism, a synchronization mechanism, and the like. In a folding and unfolding process of the foldable terminal, the damping mechanism provides a damping force, achieving a folding and unfolding feel. However, an existing damping mechanism has problems such as a small damping force and a poor folding and unfolding feel.

EP 3 876 504 A1 relates to a rotating shaft mechanism and a mobile terminal. The rotating shaft mechanism is fixedly connected to two housings, in particular a left housing and a right housing, of the mobile terminal and includes a main shaft assembly, a swing arm assembly, and a support assembly. The support assembly includes two support plates. When the two support plates are specifically disposed, the support plates are divided into a left support plate and a right support plate. The swing arm assembly includes a connecting rod group and a swing arm group, wherein the connecting group includes two connecting rods, in particular a left and a right connecting rod. The left support plate is slidably connected to the left connecting rod, and the left support plate can rotate relative to the left connecting rod.
To ensure synchronization between the left housing and the right housing, gears are respectively disposed on opposite ends of the two connecting rods in each connecting rod group. The left connecting rod and the right connecting rod drive, by using the swing arm group, the two housings to be unfolded or folded synchronously. Further, it is disclosed that, when the mobile terminal is used, the mobile terminal needs to be stable in a specific state, for example, in the folded state or the unfolded state. Therefore, when the rotating shaft mechanism is disposed, a limiting mechanism is disposed for relative rotation between the left housing and the right housing. The limiting mechanism includes a first cam that rotates synchronously with each connecting rod, and a second cam disposed opposite to each first cam. When the gear and the corresponding cam are specifically coaxially disposed, the gear of each connecting rod is coaxially and fixedly connected to one camshaft, and the camshaft is a shaft around which the connecting rod rotates. When the connecting rod rotates, protrusions and notches on the first cam may continuously fit with protrusions and the notches on the gear, to implement limitation at different positions. Further, when the first cam and the second cam perform relative limiting, thrust is needed to push the first cam or the second cam to slide towards the other corresponding cam, so that the protrusions and the notches on the first cam and the second cam can engage with each other, wherein thrust is implemented by an elastic part, for example by a spring.
CN 218 041 429 U discloses a foldable mechanism including a base, a connecting component, a damping component, a pressing plate component and a flexible support plate. The damping component includes a dumping assembly includes a first damping element and a second damping element. The first damping element is installed on a first fixing frame, is fixedly connected to a first auxiliary swing arm 25a, and can slide relative to the first fixing frame driven by the first auxiliary swing arm. The second damping element is mounted on the second fixing frame, is fixedly connected to a second auxiliary swing arm, and can slide relative to the second fixing frame driven by the second auxiliary swing arm.

### SUMMARY

To resolve the foregoing technical problem, this application provides a rotating shaft structure and a foldable terminal, as defined in the appended claims, to increase a damping force of the rotating shaft structure and achieve
a folding and unfolding feel. The structure is simple, and the costs are low. The invention is set out in the appended set of claims.

According to a first aspect, an embodiment of this application provides a rotating shaft structure. The rotating shaft structure is applied to an outward foldable terminal. The outward foldable terminal includes a first body, a second body, and the rotating shaft structure connecting the first body to the second body. The rotating shaft structure includes: a shaft cover; two connecting members, located on two sides of the shaft cover, and configured to respectively connect to the first body and the second body; a rotating mechanism, rotatably connected to the shaft cover and slidably and rotatably connected to the connecting members, and configured to control movements of the connecting members; a synchronization mechanism, rotatably connected to the shaft cover and slidably and rotatably connected to the connecting members, and configured to synchronize rotation of the two connecting members; and a plurality of damping mechanisms, where the plurality of damping mechanisms include a concave-convex gear damping mechanism and/or a smoothing damping mechanism. The concave-convex gear damping mechanism includes a pin shaft, a concave gear, a first spring, and at least two damping swing arms, the pin shaft is fixedly connected to the shaft cover, and the concave gear and the first spring are both sleeved on the pin shaft; the damping swing arm includes a rotating cam sleeved on the pin shaft and neighboring to and in contact with the concave gear and a swinging member located on a side of the rotating cam, and the swinging members of the two damping swing arms are slidably and rotatably connected to the two connecting members; and when the swinging members and the connecting members are slided and rotated, the first spring is compressed and generates an axial squeezing force, applied between the concave gear and the rotating cam to generate a damping force. The smoothing damping mechanism includes two smoothing members, the smoothing member includes a smoothing swing arm and a flexible unit, the flexible units of the two smoothing members are respectively fastened to the two connecting members, ends of the smoothing swing arms are rotatably connected to the shaft cover, and other ends of the smoothing swing arms of the two smoothing members are respectively slidably and rotatably connected to the connecting members; the flexible unit includes a connecting rod and a flexible beam, and the smoothing swing arm is fixedly connected to the connecting rod; and when the other end of the smoothing swing arm and the connecting member are slided and rotated, the connecting rod is driven to move, and the flexible beam is compressed to generate a damping force.

The plurality of damping mechanisms in the outward foldable terminal include the concave-convex gear damping mechanism and/or the smoothing damping mechanism, so that a damping force of the damping mechanisms can be increased. In addition, the damping mechanisms not only can provide a flattening force, but also can provide a closing force to adjust a folding and unfolding feel of the rotating shaft structure, helping improve user experience. Moreover, when the plurality of damping mechanisms are a plurality of concave-convex gear damping mechanisms, a problem of severer abrasion caused by a larger pressure of a cam surface of a single damping mechanism can be avoided. When the plurality of damping mechanisms include the smoothing damping mechanism, it helps maintain a hovering, unfolded, or folded state of the rotating shaft structure. Furthermore, the damping mechanism has a simple structure and low costs.

In some possible implementations, the plurality of damping mechanisms further include a lateral damping mechanism; and the lateral damping mechanism includes two lateral members, the lateral member includes a lateral swing arm and a lateral rotating portion, the lateral rotating portion is rotatably connected to the shaft cover, and the lateral swing arms of the two lateral members are respectively slidably connected to the two connecting members; and the lateral swing arm is provided with a support member and a roller rotatably connected to the support member, at least one second spring is sleeved on the support member, two opposite ends of the second spring are respectively fixedly connected to the support member and the roller; and when an angle of a plane on which the two connecting members are located is within a preset angle range, the roller is in contact with a side wall of the shaft cover, the shaft cover squeezes the roller, and the second spring is compressed to generate a damping force.

By disposing the lateral damping mechanism, when the rotating shaft structure is in an unfolded state, an unfolding retention force of the rotating shaft structure is improved by using an acting force between the roller and the shaft cover, helping improve user experience. In addition, the concave-convex gear damping mechanism and/or the smoothing damping mechanism further improves the folding and unfolding feel.

For example, the preset angle range may be, for example, 90° to 180°, 120° to 180°, or 150° to 180°.

In some possible implementations, the rotating mechanism includes a main swing arm group, and the main swing arm group includes two main swing arms separately disposed on two sides of the shaft cover; and the main swing arm includes a first main swing member and a second main swing member that are fixedly connected, the connecting member is provided with a first connecting sliding groove adapted to the second main swing member, the main swing arm is rotatably connected to the connecting member by using the second main swing member, the shaft cover is provided with a first shaft cover sliding groove adapted to the first main swing member, the main swing arm is rotatably connected to the shaft cover by using the first main swing member, a position of the shaft cover remains unchanged, the first main swing members of the two main swing arms in the main swing arm group are rotated relative to the shaft cover to drive, by using the second main swing members of the two main swing arms in the main swing arm group, the two connecting members to rotate.

The main swing arm provided in this application has a simple structure, a preparation difficulty is reduced, and costs are relatively low.

In some possible implementations, on a basis that the main swing arm includes the first main swing member and the second main swing member that are fixedly connected, cross-sectional shapes of the first main swing member and the second main swing member are both arc-shaped, improving bending reliability of the entire terminal.

In some possible implementations, the rotating mechanism further includes a secondary swing arm group, the secondary swing arm group includes two secondary swing arms separately disposed on two sides of the shaft cover, the secondary swing arm includes a swing arm rotating member and a sliding member, the swing arm rotating member is fastened to a side wall of the sliding member, the sliding member is provided with a first protrusion, and at least one swing arm sliding groove is formed between the first protrusion and the sliding member; and the connecting member is provided with a second connecting sliding groove adapted to the sliding member, a first protruding strip adapted to the swing arm sliding groove is formed on a side wall of the second connecting sliding groove, the secondary swing arm is slidably connected to the connecting member by using the swing arm sliding groove, the shaft cover is provided with a second shaft cover sliding groove adapted to the swing arm rotating member, the secondary swing arm is rotatably connected to the shaft cover by using the swing arm rotating member, a position of the shaft cover remains unchanged, the swing arm rotating members of the two secondary swing arms in the secondary swing arm group are rotated relative to the shaft cover to drive, by using the sliding members of the two secondary swing arms in the secondary swing arm group, the two connecting members to rotate.

The secondary swing arm provided in this application has a simple structure, a preparation difficulty is reduced, and costs are relatively low.

In some possible implementations, the synchronization mechanism includes two synchronization members, the synchronization member includes a synchronization swing arm and a gear, the gears of the two synchronization members mesh with each other, and the synchronization swing arms of the two synchronization members are separately disposed on two sides of the two gears meshing with each other; the gear is rotatably connected to the shaft cover by using a gear shaft, two side walls of an end of the synchronization swing arm far away from the gear is provided with a first protruding post; and the connecting member is provided with a third connecting sliding groove adapted to the synchronization swing arm, a side wall of the third connecting sliding groove is partially recessed to form a first groove adapted to the first protruding post, and the first protruding post is slided and rotated in the first groove, so that the synchronization mechanism is slidably and rotatably connected to the connecting member.

The synchronization mechanism provided in this application has a simple structure, a preparation difficulty reduced, costs are relatively low, and synchronization reliability during bending of the entire terminal is ensured.

In some possible implementations, the foldable terminal further includes a flexible screen, located on a side of the first body, the rotating shaft structure, and the second body; and the rotating shaft structure further includes a support door panel, fixedly connected to the rotating mechanism and rotating with rotation of the rotating mechanism, and the support door panel is configured to support the flexible screen.

A connection manner of the support door panel is simple. In addition, by supporting the flexible screen by the support door panel, a screen stress is reduced, preventing a bending region of the flexible screen from collapsing, falling, or being damaged.

In some possible implementations, on a basis that the rotating shaft structure further includes the support door panel, when the main swing arm includes the first main swing member and the second main swing member, the first main swing member and the second main swing member each are provided with a fastening post, and the main swing arm is connected to the support door panel by using the fastening posts. The fastening posts can implement a connection of the support door panel, a fastening manner is simple, and another structure does not need to be changed, helping dispose the another structure.

In some possible implementations, on a basis that the rotating shaft structure further includes the support door panel, a material of the support door panel includes an ultra-high polymer material, and the support door panel is integrally formed.

This arrangement improves machining reliability and reduces machining costs of the support door panel, and the formed support door panel is relatively flat, improving a carrying capability of the support door panel for the flexible screen, and ameliorating a problem such as a screen crease.

In some possible implementations, the rotating shaft structure further includes a decorating door panel, fixedly connected to the rotating mechanism and rotating with rotation of the rotating mechanism, and the decorating door panel is configured to cover the rotating mechanism, the synchronization mechanism, and/or the damping mechanism to protect the rotating mechanism, the synchronization mechanism, and/or the damping mechanism, and prevent the rotating mechanism, the synchronization mechanism, and/or the damping mechanism from interfering with another structure in the terminal.

In some possible implementations, on a basis that the rotating shaft structure further includes the decorating door panel, when the secondary swing arm includes the swing arm rotating member and the sliding member, the decorating door panel is fixedly connected to a side of the sliding member facing away from the first protrusion, so that the decorating door panel is fixedly connected to the secondary swing arm; and two opposite ends of the decorating door panel are partially bent, a decorating sliding groove is formed between a bent portion of the decorating door panel and an unbent portion of the decorating door panel, two opposite ends of the connecting member each are provided with a second protrusion, the second protrusion is located in the decorating sliding groove, and the decorating door panel is slidably connected to the connecting member through the decorating sliding groove. The secondary swing arm can implement a connection of the decorating door panel, a fastening manner is simple, and another structure does not need to be changed, helping dispose the another structure.

In some possible implementations, on a basis that the rotating shaft structure further includes the decorating door panel, a material of the decorating door panel includes an ultra-high polymer material, and the decorating door panel is integrally formed.

This arrangement improves machining reliability and reduces machining costs of the decorating door panel, and the formed decorating door panel is relatively flat. When the rotating shaft structure is disposed in the foldable terminal, it facilitates disposing of another structure in the terminal.

In some possible implementations, there are two pin shafts, two concave gears, two first springs, and four damping swing arms; the two pin shafts are arranged side by side along a first direction, the pin shaft extends along a second direction, the concave gear has two concave gear holes, the two concave gear holes are arranged side by side along the first direction, the concave gear is separately sleeved on the two pin shafts through the two concave gear holes, there is a gap between the two concave gears, the two first springs are respectively sleeved on the two pin shafts and are separately located in the gap between the two concave gears, the rotating cams of the two damping swing arms are disposed neighboring to one of the concave gears and are located on a side of the concave gear facing away from the first spring along the second direction, and the rotating cams of other two damping swing arms are disposed neighboring to the other concave gear and are located on a side of the concave gear facing away from the first spring along the second direction; two side walls of an end of the swinging member far away from the rotating cam are provided with a second protruding post, the connecting member is provided with a fifth connecting sliding groove adapted to the damping swing arm, a side wall of the fifth connecting sliding groove is partially recessed to form a second groove adapted to the second protruding post, and the second protruding post is slided and rotated in the second groove, so that the damping mechanism is slidably and rotatably connected to the connecting member; the first direction is a direction from the first body to the second body, and the second direction is an axial direction of the rotating shaft structure.

The damping mechanism provided in this application has a simple structure, a preparation difficulty is reduced, costs are relatively low, and a provided damping force is relatively large.

For example, the first direction is an X-axis direction in an embodiment, and the second direction is a Y-axis direction in an embodiment.

In some possible implementations, on a basis that there are two pin shafts, two concave gears, two first springs, and four damping swing arms, a connection portion is disposed between two damping swing arms located on the same pin shaft, and two ends of the connection portion are respectively fixedly connected to the two damping swing arms, to ensure synchronization of the two damping swing arms located on the same pin shaft, and ensure reliability during bending of the entire terminal.

In some possible implementations, the smoothing swing arm includes a rotating shaft and a sliding portion located on a side of the rotating shaft, the sliding portion is provided with a limiting block, and two side walls of an end of the sliding portion far away from the rotating shaft each are provided with a third protruding post; the flexible beams are located on two sides of the connecting rod, and the connecting rod is provided with a limiting hole; the shaft cover is provided with a rotating hole adapted to the rotating shaft, so that the smoothing swing arm is rotatably connected to the shaft cover; and the connecting member is provided with a fourth connecting sliding groove, a side wall of the fourth connecting sliding groove is partially recessed to form a third groove adapted to the third protruding post, and the third protruding post is slided and rotated in the third groove, so that the smoothing swing arm is slidably and rotatably connected to the connecting member; and the flexible beams located on the two sides of the connecting rod are separately fastened to an unrecessed side wall of the fourth connecting sliding groove, and the limiting block of the smoothing swing arm is clamped in the limiting hole of the connecting rod, so that the smoothing swing arm is fixedly connected to the connecting rod.

The damping mechanism provided in this application has a simple structure, a preparation difficulty is reduced, costs are relatively low, and a provided damping force is relatively large.

In some possible implementations, when the plurality of damping mechanisms further includes the lateral damping mechanism, two side walls of the lateral swing arm each are provided with a second protruding strip, the connecting member is provided with a fifth connecting sliding groove, a side wall of the fifth connecting sliding groove is partially recessed to form a fourth groove adapted to the second protruding strips, and the second protruding strips are slided in the fourth groove, so that the lateral swing arm is slidably connected to the connecting member; the shaft cover is provided with a third shaft cover sliding groove adapted to the lateral rotating portion, and the lateral member is rotatably connected to the shaft cover by using the lateral rotating portion; there are two lateral rotating portions, the two lateral rotating portions are spaced away; the lateral swing arm is an annular structure with an opening, and the two lateral rotating portions are separately fixedly connected to the lateral swing arm and are located on two sides of the opening; and the support member is located in the annular structure, and the roller is located in a gap between the two lateral rotating portions.

The damping mechanism provided in this application has a simple structure, a preparation difficulty is reduced, costs are relatively low, and a provided damping force is relatively large.

In some possible implementations, there are three damping mechanisms. When there are three damping mechanisms, the costs do not increase due to an increase in the quantity of damping mechanisms, and the folding and unfolding feel is not affected due to a reduced damping force caused by an extremely small quantity of damping mechanisms.

In some possible implementations, the three damping mechanisms are all concave-convex gear damping mechanisms; or the three damping mechanisms are all smoothing damping mechanisms; or at least one of the three damping mechanisms is a concave-convex gear damping mechanism, and at least one of the three damping mechanisms is a smoothing damping mechanism. Certainly, a combination manner of the three damping mechanisms is not limited thereto.

In some possible implementations, there are three damping mechanisms; and at least one of the three damping mechanisms is a concave-convex gear damping mechanism, and at least one of the three damping mechanisms is a lateral damping mechanism; or at least one of the three damping mechanisms is a smoothing damping mechanism, and at least one of the three damping mechanisms is a lateral damping mechanism. Certainly, a combination manner of the three damping mechanisms is not limited thereto.

According to a second aspect, an embodiment of this application provides a foldable terminal. The foldable terminal is an outward foldable terminal. The outward foldable terminal includes the rotating shaft structure according to the first aspect. Beneficial effects are the same as those of the first aspect.

### BRIEF DESCRIPTION OF DRAWINGS

FIG. 1 is a diagram of a structure of a foldable terminal according to an embodiment of this application;
FIG. 2 is a diagram of a foldable mobile phone during folding according to an embodiment of this application;
FIG. 3 is a diagram of a front surface structure of a rotating shaft structure according to an embodiment of this application;
FIG. 4 is a diagram of a back surface structure of a rotating shaft structure according to an embodiment of this application;
FIG. 5 is an exploded view of the rotating shaft structure shown in FIG. 3;
FIG. 6 is an exploded view of the rotating shaft structure shown in FIG. 4;
FIG. 7 is a diagram of a structure of a main swing arm according to an embodiment of this application;
FIG. 8 is a diagram of a partial structure of a connecting member according to an embodiment of this application;
FIG. 9 is a diagram of a position relationship of a main swing arm, a connecting member, and a shaft cover according to an embodiment of this application;
FIG. 10 is a diagram of a structure of a secondary swing arm group according to an embodiment of this application;
FIG. 11 is a diagram of a partial structure of a connecting member according to an embodiment of this application;
FIG. 12 is a diagram of a structure of a synchronization mechanism according to an embodiment of this application;
FIG. 13 is a diagram of a partial structure of a connecting member according to an embodiment of this application;
FIG. 14 is a top view of a damping mechanism according to an embodiment of this application;
FIG. 15 is a three-dimensional view of a damping mechanism according to an embodiment of this application;
FIG. 16 is a diagram of a partial structure of a connecting member according to an embodiment of this application;
FIG. 17 is an enlarged view of a region QQ in FIG. 3;
FIG. 18 is a cross-sectional view of FIG. 17 along a direction OO';
FIG. 19 is a diagram of a partial structure of a rotating shaft structure according to an embodiment of this application;
FIG. 20 is a diagram of a position relationship of a support door panel when a foldable terminal is in a folded state according to an embodiment of this application;
FIG. 21 is a diagram of a partial structure of a rotating shaft structure according to an embodiment of this application;
FIG. 22 is a section view of FIG. 21 along a direction PP';
FIG. 23 is a diagram of a partial structure of a connecting member according to an embodiment of this application;
FIG. 24 is a diagram of a partial structure of a decorating door panel according to an embodiment of this application;
FIG. 25 is a diagram of a front surface structure of another rotating shaft structure according to an embodiment of this application;
FIG. 26 is a diagram of a back surface structure of another rotating shaft structure according to an embodiment of this application;
FIG. 27 is an exploded view of the rotating shaft structure shown in FIG. 25;
FIG. 28 is an exploded view of the rotating shaft structure shown in FIG. 26;
FIG. 29 is an enlarged view of a region WW in FIG. 25;
FIG. 30 is an enlarged view of a region RR in FIG. 27;
FIG. 31 is a cross-sectional view of FIG. 29 along a direction SS';
FIG. 32 is a diagram of a front surface structure of another rotating shaft structure according to an embodiment of this application;
FIG. 33 is a diagram of a back surface structure of another rotating shaft structure according to an embodiment of this application;
FIG. 34 is an exploded view of the rotating shaft structure shown in FIG. 32;
FIG. 35 is an exploded view of the rotating shaft structure shown in FIG. 33;
FIG. 36 is a partial diagram of a position relationship of a second damping mechanism and a shaft cover according to an embodiment of this application;
FIG. 37 is a cross-sectional view of FIG. 36 along a direction TT';
FIG. 38 is a top view of a second damping mechanism according to an embodiment of this application; and
FIG. 39 is a three-dimensional view of a second damping mechanism according to an embodiment of this application.

### Reference Numerals

10-first display unit; 20-first body; 30-second body; 40-rotating shaft structure; 100-foldable mobile phone;
21-first housing; 22-first middle frame; 221-first exterior part;
31-second housing; 32-second middle frame; 321-second exterior part;
41-shaft cover; 411-first shaft cover sliding groove;
42-rotating mechanism; 421-main swing arm; 4211-first main swing member; 4212-second main swing member; 4213-fastening post; 422-secondary swing arm; 4221-swing arm rotating member; 4222-sliding member; 42221-first sliding surface; 42222-second sliding surface; 42223-side sliding surface; 4223-first protrusion; 42231-first protruding portion; 42232-second protruding portion; 4224-swing arm sliding groove; 423-connecting member; 4230-connecting hole; 4231-first connecting member; 4232-second connecting member; 4233-first connecting sliding groove; 4234-second connecting sliding groove; 4235-first protruding strip; 4236-structural member; 4237-third connecting sliding groove; 4238-first groove; 4239-fifth connecting sliding groove; 4240-second groove; 4241-second protrusion; 4242-fourth connecting sliding groove; 4243-third groove;
43-synchronization mechanism; 431-synchronization member; 4311-synchronization swing arm; 4311 1-first protruding post; 4312-gear; 43121-gear portion; 43122-gear rotating portion;
44-damping mechanism; 44a-first damping mechanism; 44b-second damping mechanism; 44b1-first smoothing member; 44b2-second smoothing member; 44b3-first lateral member; 44b3-second lateral member; 44c-third damping mechanism; 441-pin shaft; 442-concave gear; 4421-concave gear hole; 443-spring; 444-damping swing arm; 4441-rotary annular cam; 4442-swinging member; 4443-second protruding post; 445-connection portion; 446-smoothing swing arm; 4461-rotating shaft; 4462-sliding portion; 4463-limiting block; 4464-third protruding post; 447-flexible unit; 4471-connecting rod; 44711-limiting hole; 4472-flexible beam; 448-lateral swing arm; 4481-second protruding strip; 4482-opening; 4483-end portion; 4484-support member; 4485-roller; 449-lateral rotating portion; 4486-second spring; 4487-bottom surface;
45-support door panel; 451-first support door panel; 452-second support door panel;
46-decorating door panel; 461-first decorating door panel; 462-second decorating door panel; and 463-decorating sliding groove.

### DESCRIPTION OF EMBODIMENTS

The following clearly and completely describes technical solutions in embodiments of this application with reference to the accompanying drawings in the embodiments of this application. Obviously, the described embodiments are a part rather than all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims of embodiments of this application, the terms such as "first" and "second" are used to distinguish between different objects, but are not intended to describe a particular order of the objects. For example, a first target object, a second target object, and the like are used to distinguish between different target objects, but are not intended to describe a particular order of the target objects.

In embodiment of this applications, the term such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise stated, "a plurality of" means two or more than two. For example, a plurality of processing units are two or more processing units, and a plurality of systems are two or more systems.

An embodiment of this application provides a foldable terminal. The foldable terminal provided in this embodiment of this application may be a mobile phone, a tablet computer, a personal digital assistant (personal digital assistant, PDA for short), an in-vehicle computer, a television, a smart wearable device, a smart home device, or the like. A specific form of the foldable terminal is not particularly limited in this embodiment of this application. For ease of description, an example in which the foldable terminal is a foldable mobile phone is used below.

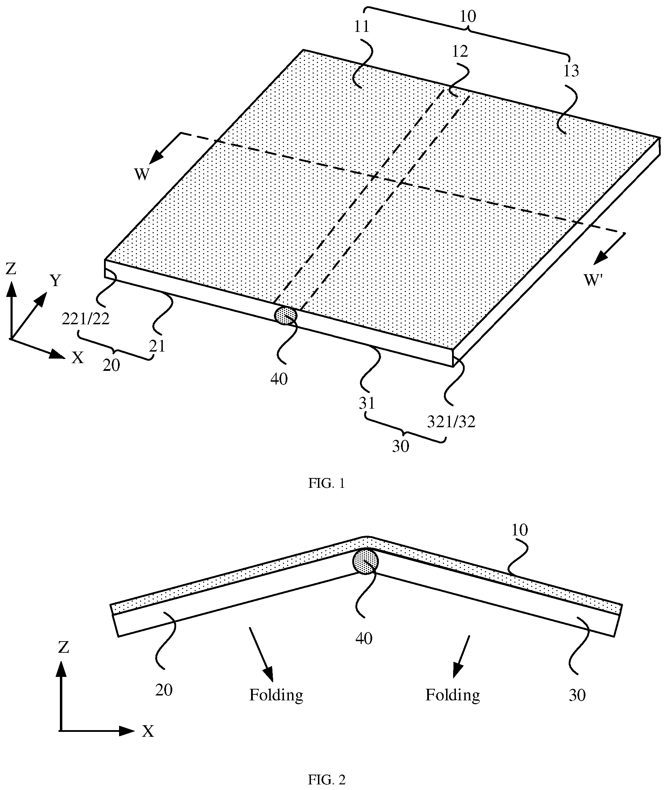

FIG. 1 is a diagram of a structure of a foldable terminal according to an embodiment of this application. As shown in FIG. 1, a foldable mobile phone 100 includes a first display unit (also referred to as a foldable screen or a flexible screen) 10.

The first display unit 10 is, for example, a flexible display screen. The first display unit 10 is, for example, an organic light emitting diode (Organic Light Emitting Diode, OLED) display screen. The OLED display screen does not need a back light unit, and a base substrate in the OLED display screen may use, for example, a flexible resin material such as polyethylene terephthalate (Polyethylene terephthalate, PET), so that the OLED display screen has a bendable feature. Certainly, a type of the first display unit 10 includes but is not limited to the OLED display screen, and all bendable display screen shall fall within the protection scope of this application. For example, the first display unit 10 may alternatively be a liquid crystal display (Liquid Crystal Display, LCD) screen, an LED display screen (for example, a micro-LED display screen or a mini-LED display screen), or the like.

It should be noted that to clearly describe subsequent structure features and a position relationship of the structure features, a position relationship of structures in the foldable mobile phone 100 are defined based on an X-axis direction, a Y-axis direction, and a Z-axis direction. The X-axis direction is a width direction after the foldable mobile phone 100 is unfolded. The Y-axis direction is a length direction after the foldable mobile phone 100 is unfolded. The Z-axis direction is a thickness direction after the foldable mobile phone 100 is unfolded.

Still refer to FIG. 1. The foldable mobile phone 100 further includes a structural component. The structural component includes a first body 20, a second body 30, and a rotating shaft structure 40. Along the X-axis direction, the first body 20 and the second body 30 are located on two sides of the rotating shaft structure 40. The rotating shaft structure 40 is separately connected to the first body 20 and the second body 30. The first body 20, the rotating shaft structure 40, and the second body 30 may be configured to carry the first display unit 10. The first body 20 and the second body 30 may be separated rotated around an axis S0 (parallel to the Y-axis direction) of the rotating shaft structure 40 to implement a folding state, an unfolding state, or the like of the first display unit 10, that is, to implement a folding state, an unfolding state, or the like of the foldable mobile phone 100.

It should be noted that the foldable mobile phone 100 may be folded at a plurality of positions. Correspondingly, the structural component may include a plurality of rotating shaft structures 40 and a plurality of bodies. For example, the structural component may include two rotating shaft structures 40 and three bodies, and two neighboring bodies are connected by using one rotating shaft structure 40. In this way, the foldable mobile phone 100 has two folding positions. As can be learned, the structural component includes at least one rotating shaft structure 40 and at least two bodies, and two neighboring bodies are connected by using one rotating shaft structure 40. For ease of description, embodiments of this application are all described by using an example in which the structural component includes one rotating shaft structure 40 and two bodies (namely, the first body 20 and the second body 30).

FIG. 1 is a diagram of a foldable mobile phone after unfolding. FIG. 2 is a diagram of a foldable mobile phone during folding In FIG. 2, when folded, the foldable mobile phone 100 may be folded towards directions facing away from light-emitting directions (indicated by arrows in FIG. 2) of the first display unit 10, that is, directions in which the first body 20 and the second body 30 are rotated around the rotating shaft structure 40 are opposite to the light-emitting directions of the flexible screen 10, in other words, when the foldable mobile phone 100 is in a folded state, the first display unit 10 is exposed to the outside. In this case, the foldable mobile phone 100 may also be referred to as an outward foldable mobile phone.

Still refer to FIG. 1. The first body 20 includes a first housing 21 and a first middle frame 22. The second body 30 includes a second housing 31 and a second middle frame 32.

The first housing 21 may be a back cover (also referred to as a battery cover) of the foldable mobile phone 100, or may be a display unit used for display. This is not limited in this embodiment of this application. The second housing 31 may be a back cover (also referred to as a battery cover) of the foldable mobile phone, or may be a display unit used for display. This is not limited in this embodiment of this application either. Embodiments of this application are all described by using an example in which the first housing 21 is a back cover and the second housing 31 is a display unit (also referred to as a second display unit or a display screen, to be distinguished from the first display unit 10).

A type of the second display unit 31 includes, for example, a display screen such as an LCD display screen, an OLED display screen, or an LED display screen.

Still refer to FIG. 1. The first middle frame 22 includes a first exterior part 221 and a first support member (not shown in FIG. 1) that is located between the first display unit 10 and the back cover 21. The second middle frame 32 includes a second exterior part 321 and a second support member (not shown in FIG. 1) that is located between the first display unit 10 and the second housing 31.

The first display unit 10, the back cover 21, the first exterior part 221, the second display unit 31, and the second exterior part 321 form an accommodating chamber. The accommodating chamber is provided with a structure such as a printed circuit board, a flexible printed circuit, or a functional device (not shown in FIG. 1 and FIG. 2). The functional device includes, for example, a display driver module, a camera, and a battery. The first support member of the first middle frame 22 and the second support member of the second middle frame 32 support a structure in the accommodating chamber.

The rotating shaft structure 40 includes a shaft cover, a rotating structure, a synchronization mechanism, a damping mechanism, a door panel, and the like. However, each structure in an existing rotating shaft structure 40 has a relatively large quantity of parts, and machining complexity and costs are high. In addition, an existing damping mechanism has problems such as a small damping force and a poor folding and unfolding feel.

Based thereupon, an embodiment of this application provides a rotating shaft structure. The rotating shaft structure has a small quantity of parts and is easy to assemble, a weight of the entire terminal is reduced, costs are reduced, and a damping force of the rotating shaft structure is increased to implement a folding and unfolding feel. In addition, a problem such as a screen crease can further be ameliorated.

A specific structure of the rotating shaft structure provided in this embodiment of this application is described below.

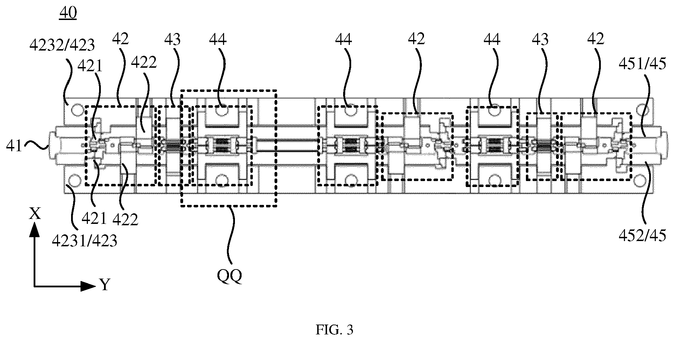

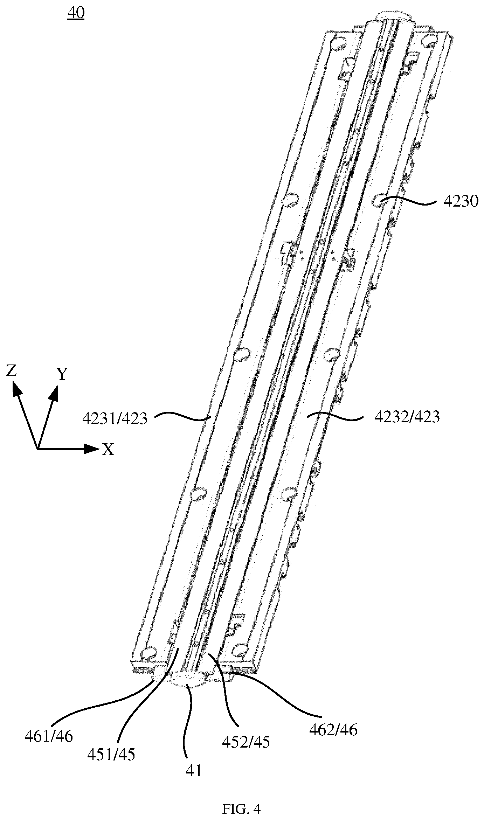

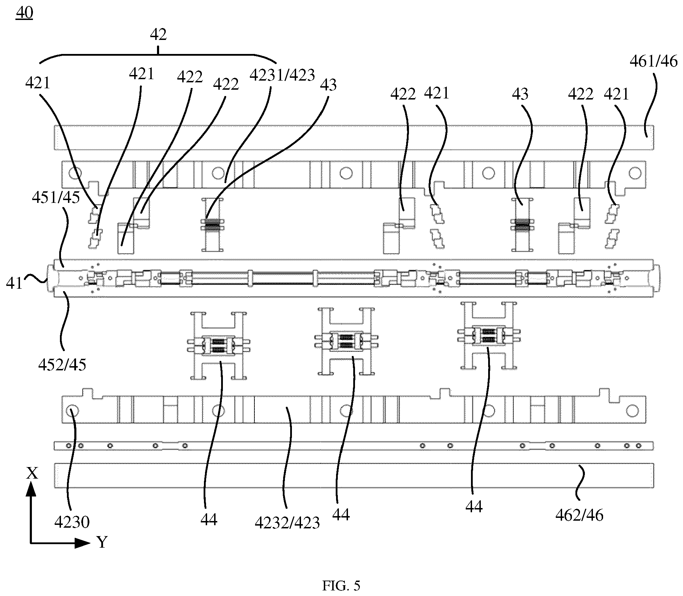

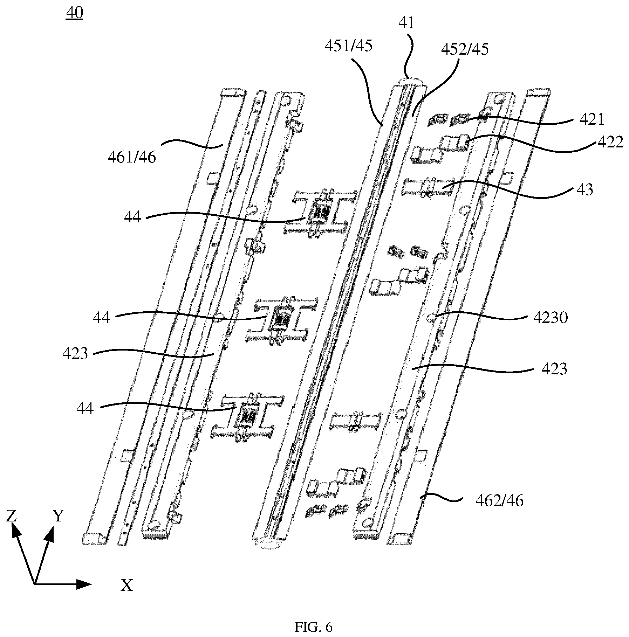

In an example, FIG. 3 is a diagram of a front surface structure of a rotating shaft structure according to an embodiment of this application; FIG. 4 is a diagram of a back surface structure of a rotating shaft structure according to an embodiment of this application; FIG. 5 is an exploded view of the rotating shaft structure shown in FIG. 3; and FIG. 6 is an exploded view of the rotating shaft structure shown in FIG. 4. As shown in FIG. 3, FIG. 4, FIG. 5, and FIG. 6, the rotating shaft structure 40 includes a shaft cover 41, a rotating mechanism 42, a synchronization mechanism 43, a damping mechanism 44, two support door panels 45, and two decorating door panels 46. The two support door panels 45 are a first support door panel 451 and a second support door panel 452. The two decorating door panels 46 are a first decorating door panel 461 and a second decorating door panel 462. Along the X-axis direction, the first support door panel 451 and the second support door panel 452 are separately disposed on two sides of the shaft cover 41. The first decorating door panel 461 and the second decorating door panel 462 are separately disposed on two sides of the shaft cover 41.

It should be noted that to clearly display structures such as the shaft cover 41, the rotating mechanism 42, the synchronization mechanism 43, and the damping mechanism 44 of the rotating shaft structure 40, FIG. 3 does not show the decorating door panel 46 (which covers the shaft cover 41, the rotating mechanism 42, the synchronization mechanism 43, and the damping mechanism 44).

The rotating mechanism 42 includes a main swing arm group and a secondary swing arm group. The main swing arm group includes two main swing arms 421 separately disposed on two sides of the shaft cover 41 along the X-axis direction. The secondary swing arm group includes two secondary swing arms 422 separately disposed on two sides of the shaft cover 41 along the X-axis direction. For example, there are a plurality of main swing arm groups and a plurality of secondary swing arm groups. The plurality of main swing arm groups and the plurality of secondary swing arm groups are evenly disposed on the shaft cover 41 separately. For example, there are three main swing arm groups and three secondary swing arm groups, which are evenly disposed on the shaft cover 41 separately.

The rotating shaft structure 40 further includes two connecting members 423 separately disposed on two sides of the shaft cover 41 along the X-axis direction. The two connecting members 423 are a first connecting member 4231 and a second connecting member 4232. The first connecting member 4231 and the second connecting member 4232 each are provided with at least one connecting hole 4230. The first connecting member 4231 is fixedly connected to the first body 20 through the connecting hole 4230 on the first connecting member 4231. For example, the first connecting member 4231 is fixedly connected to the first support member of the first middle frame 22 through the connecting hole 4230 on the first connecting member 4231 to fixedly connect to the first body 20. The second connecting member 4232 is fixedly connected to the second body 30 through the connecting hole 4230 on the second connecting member 4232. For example, the second connecting member 4232 is fixedly connected to the first support member of the second middle frame 32 through the connecting hole 4230 on the second connecting member 4232 to fixedly connect to the second body 30. That is, the rotating shaft structure 40 is connected to the first body 20 and the second body 30 by using the two connecting members 423 to fold or unfold the first body 20 and the second body 30 by using the rotating shaft structure 40.

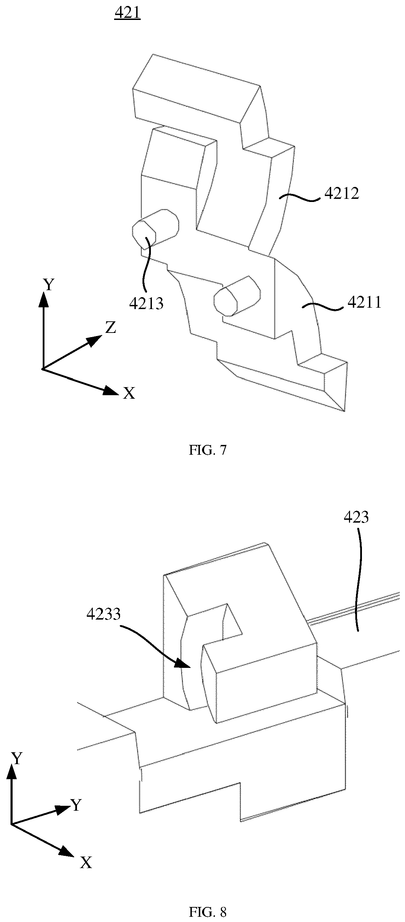

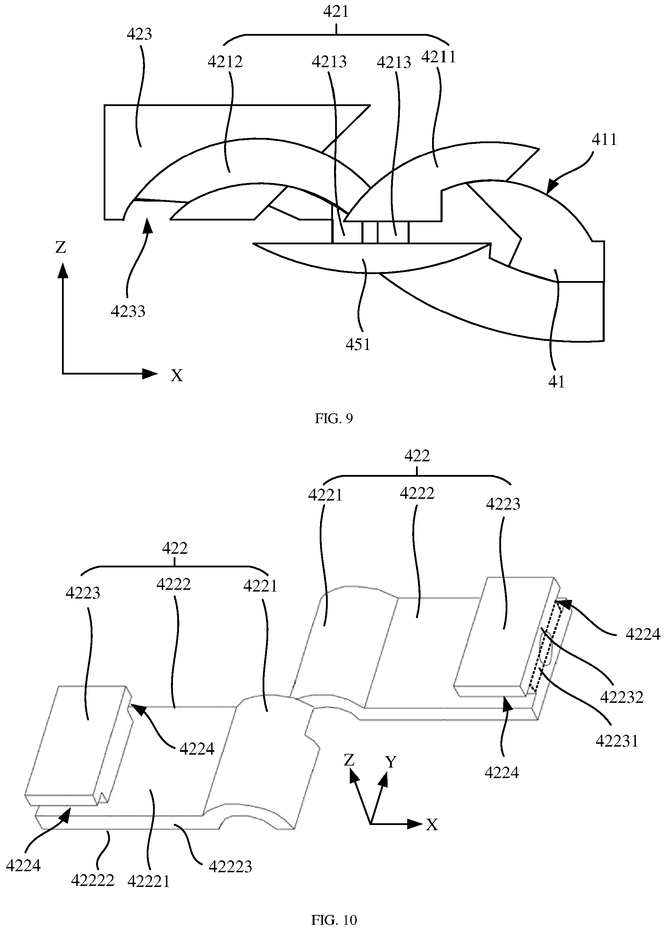

FIG. 7 is a diagram of a structure of a main swing arm according to an embodiment of this application; FIG. 8 is a diagram of a partial structure of a connecting member according to an embodiment of this application; and FIG. 9 is a diagram of a position relationship of a main swing arm, a connecting member, and a shaft cover. As shown in FIG. 7, FIG. 8, and FIG. 9, the main swing arm 421 includes a first main swing member 4211 and a second main swing member 4212. Cross-sectional shapes of the first main swing member 4211 and the second main swing member 4212 are both arc-shaped or approximately arc-shaped, that is, projections of the first main swing member 4211 and the second main swing member 4212 on a plane formed by the X-axis and the Z-axis are both arc-shaped or approximately arc-shaped. The connecting member 423 is provided with a first connecting sliding groove 4233 adapted to the second main swing member 4212. At least a part of the second main swing member 4212 is located in the first connecting sliding groove 4233 to rotatably connect to the connecting member 423 through the first connecting sliding groove 4233. The shaft cover 41 is provided with a first shaft cover sliding groove 411 adapted to the first main swing member 4211. At least a part of the first main swing member 4211 is located in the first shaft cover sliding groove 411 to rotatably connect to the shaft cover 41 through the first shaft cover sliding groove 411, so that when a position of the shaft cover 41 remains unchanged, the connecting member 423 can be rotated relative to the shaft cover 41 to fold or unfold the first body 20 and the second body 30.

It should be noted that the projection on the plane formed by the X-axis and the Z-axis refers to the projection on the plane formed by the X-axis and the Y-axis when the foldable mobile phone 100 is in an unfolded state. Details are the same in the following examples, and will not be repeated again.

FIG. 10 is a diagram of a structure of a secondary swing arm group according to an embodiment of this application. As shown in FIG. 10, the secondary swing arm 422 includes a swing arm rotating member 4221 and a sliding member 4222 integrally formed with the swing arm rotating member 4221. A cross-sectional shape of the swing arm rotating member 4221 is, for example, arc-shaped or approximately arc-shaped, that is, a projection of the swing arm rotating member 4221 on a plane formed by the X-axis and the Z-axis is arc-shaped or approximately arc-shaped. The sliding member 4222 is, for example, flat plate-shaped. The sliding member 4222 includes a first sliding surface 42221 and a second sliding surface 42222 that are disposed opposite to each other along the Z-axis direction, and further includes a side sliding surface 42223 connecting the first sliding surface 42221 to the second sliding surface 42222. The swing arm rotating member 4221 is fastened to the side sliding surface 42223 to fixedly connect to the sliding member 4222. The first surface 42221 of the sliding member 4222 is provided with a first protrusion 4223. The first protrusion 4223 includes a first protruding portion 42231 and a second protruding portion 42232 that are sequentially disposed along the Z-axis direction. A size of the first protruding portion 42231 in the Y-axis direction is less than a size of the second protruding portion 42232 in the Y-axis direction, so that the second protruding portion 42232 and the first surface 42221 form at least one swing arm sliding groove 4224. FIG. 10 is described by using an example in which the second protruding portion 42232 and the first surface 42221 form two swing arm sliding grooves 4224 and the two swing arm sliding grooves 4224 are opposite to each other along the Y-axis direction.

It should be noted that this embodiment of this application is described by using an example in which the swing arm rotating member 4221 and the sliding member 4222 are integrally formed, but this shall not constitute any limitation to this application. For example, the swing arm rotating member 4221 and the sliding member 4222 may alternatively be separately formed, and fixedly connected together in a manner of welding or bonding.

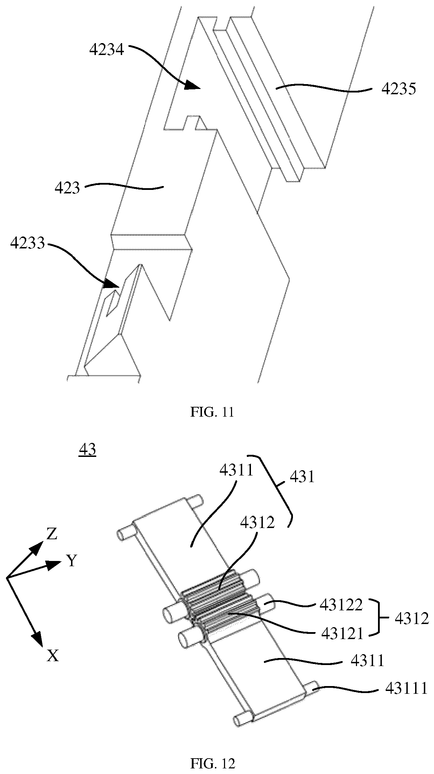

FIG. 11 is a diagram of a partial structure of a connecting member according to an embodiment of this application. As shown in FIG. 11, the connecting member 423 is provided with a second connecting sliding groove 4234 adapted to the sliding member 4222, and a first protruding strip 4235 adapted to the swing arm sliding groove 4224 is formed on a side wall of the second connecting sliding groove 4234. The first protruding strip 4235 is slided in the swing arm sliding groove 4224, so that the secondary swing arm 422 is slidably connected to the connecting member 423.

The shaft cover 41 is provided with a second shaft cover sliding groove (not shown in the figure) adapted to the swing arm rotating member 4221. At least a part of the swing arm rotating member 4221 is located in the second shaft cover sliding groove to rotatably connect to the shaft cover 41 through the second shaft cover sliding groove, so that when the position of the shaft cover 41 remains unchanged, the connecting member 423 can be rotated relative to the shaft cover 41 to fold or unfold the first body 20 and the second body 30.

As can be learned from the foregoing content, the main swing arm 421 is separately rotatably connected to the connecting member 423 and the shaft cover 41; and the secondary swing arm 422 is slidably connected to the connecting member 423, and is rotatably connected to the shaft cover 41. The main swing arm 421, the secondary swing arm 422, the connecting member 423, and the shaft cover 41 form a linkage mechanism to control a movement of the connecting member 423 and implement a rotating movement of the rotating shaft structure 40, so that the first body 20 and the second body 30 can be folded or unfolded, that is, the foldable mobile phone 100 can be folded or unfolded.

It should be noted that a quantity and a disposing position of synchronization mechanisms 43 are not limited in this embodiment of this application. A person skilled in the art may select the quantity and the disposing position of synchronization mechanisms 43 based on an actual situation. This embodiment of this application is described by using an example in which there are two synchronization mechanisms 43 and both are evenly disposed on the shaft cover 41 separately.

FIG. 12 is a diagram of a structure of a synchronization mechanism according to an embodiment of this application. As shown in FIG. 12, the synchronization mechanism 43 includes two synchronization members 431 arranged side by side along an X-axis direction. The synchronization member 431 includes a synchronization swing arm 4311 and a gear 4312. The gears 4312 of the two synchronization members 431 mesh with each other. The synchronization swing arms 4311 of the two synchronization members 431 along the X-axis direction are separately disposed on two sides of the two gears 4312 meshing with each other.

Still refer to FIG. 12. The gear 4312 includes a gear portion 43121 and two gear rotating portions (also referred to as gear shafts) 43122 located on two sides of the gear portion 43121 along a Y-axis direction. The two gears 4312 mesh with each other by using the gear portions 43121. The shaft cover 41 is provided with a rotating hole (not shown in the figure) adapted to the gear rotating portion 43122. The gear rotating portions 43122 of the two gears 4312 are correspondingly inserted into the rotating holes one by one, so that the synchronization mechanism 43 is rotatably connected to the shaft cover 41. Two side walls of an end of the synchronization swing arm 4311 far away from the gear 4312 are provided with two first protruding posts 43111 disposed opposite to each other along the Y-axis direction. Extension directions of the two first protruding posts 43111 are opposite.

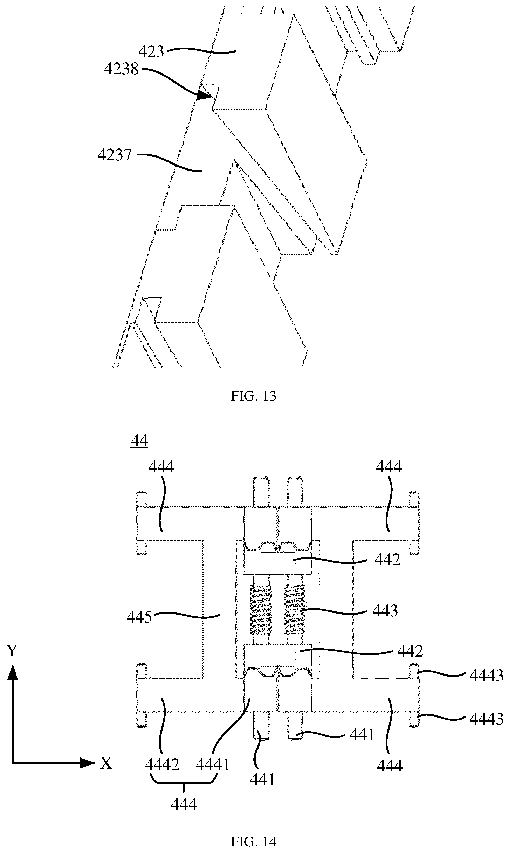

FIG. 13 is a diagram of a partial structure of a connecting member according to an embodiment of this application. As shown in FIG. 13, the connecting member 423 is provided with a third connecting sliding groove 4237 adapted to the synchronization swing arm 4311, a side wall of the third connecting sliding groove 4237 is partially recessed to form a first groove 4238 adapted to the two first protruding posts 43111, and the first protruding posts 43111 are slided and rotated in the first groove 4238, so that the synchronization mechanism 43 is slidably and rotatably connected to the connecting member 423. The groove 4238 has a slope to facilitate sliding of the synchronization member 431.

As can be learned according to the foregoing content, the synchronization mechanism 43 slidably and rotatably cooperates with the connecting member 423 by using the protruding post 43111. The gears 4312 mesh with each other to synchronously rotate the first connecting member 4231 and the second connecting member 4232, ensuring synchronization of the first connecting member 4231 and the second connecting member 4232, and further ensuring synchronization of the first body 20 and the second body 30.

The damping mechanism 44 provides a damping force. In a process of folding or unfolding the foldable mobile phone 100, a folding and unfolding feel can be implemented. A quantity of damping mechanisms 44 is not limited in this embodiment of this application. A person skilled in the art may perform arrangement based on an actual situation. FIG. 1 to FIG. 4 are described by using an example in which there are three damping mechanisms 44 and the three damping mechanisms 44 are evenly disposed on the shaft cover 41 separately. When there are three damping mechanisms 44, the costs do not increase due to an increase in the quantity of damping mechanisms 44, and the folding and unfolding feel is not affected due to a reduced damping force caused by an extremely small quantity of damping mechanisms 44.

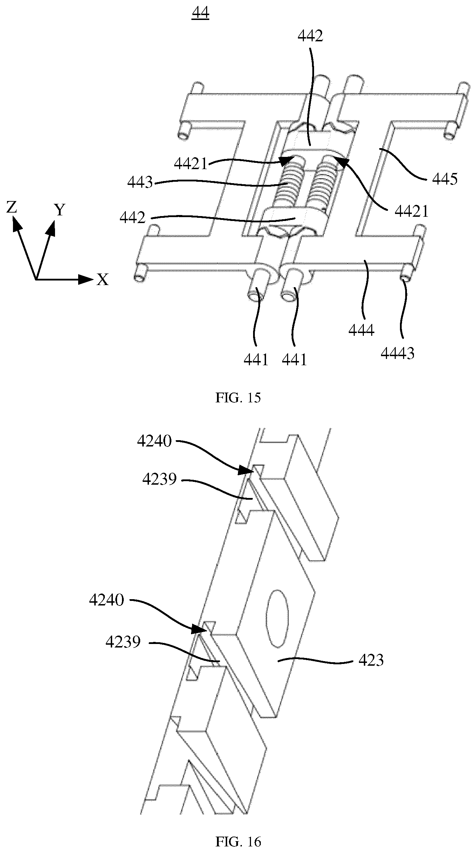

FIG. 14 is a top view of a damping mechanism according to an embodiment of this application. FIG. 15 is a three-dimensional view of a damping mechanism according to an embodiment of this application. As shown in FIG. 14 and FIG. 15, the damping mechanism 44 includes two pin shafts 441, two concave gears 442, two first springs 443, and four damping swing arms 444. To be distinguished from a damping mechanism in the following example, the damping mechanism 44 in this example may also be referred to as a concave-convex gear damping mechanism. The two pin shafts 441 are arranged side by side along an X-axis direction, and each pin shaft 441 extends along a Y-axis direction. Each concave gear 442 has two concave gear holes 4421 arranged side by side along the X-axis direction. The concave gear 442 is sleeved on the pin shafts 441 through the two concave gear holes 4421, and there is a gap between the two concave gears 442. The two first springs 443 are respectively sleeved on the two pin shafts 441, and are separately located at the gap between the two concave gears 442.

The damping swing arm 444 includes a rotary annular cam 4441 and a swinging member 4442 that is located on a side of the rotary annular cam 4441 and that is fixedly connected to the rotating cam 4441. Two side walls of an end of the swinging member 4442 far away from the rotating cam 4441 are provided with two second protruding posts 4443 extending along the Y-axis direction. Extension directions of the two second protruding posts 4443 are opposite. Along the Y-axis direction, two damping swing arms 444 are separately sleeved on one of the pin shafts 441 by using respective rotary annular cams 4441, and the two rotary annular cams 4441 each are disposed neighboring to one concave gear 442 and are both located on a side of the concave gear 442 facing away from the first spring 443; and the other two damping swing arms 444 are separately sleeved on the other pin shaft 441 by using respective rotary annular cams 4441, and the two rotary annular cams 4441 each are disposed neighboring to one concave gear 442 and are both located on a side of the concave gear 442 facing away from the first spring 443.

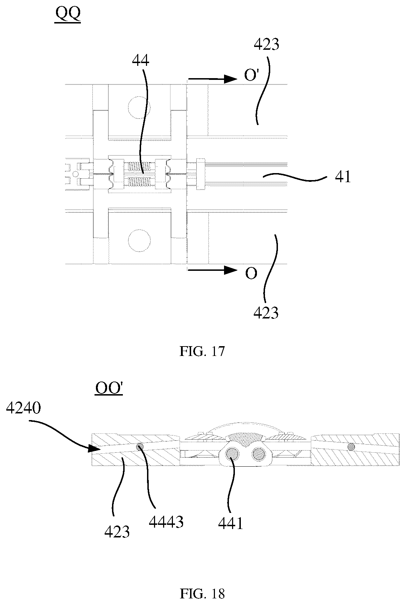

FIG. 16 is a diagram of a partial structure of a connecting member according to an embodiment of this application. As shown in FIG. 16, the connecting member 423 is provided with a fifth connecting sliding groove 4239 adapted to the damping swing arm 444, and a side wall of the fifth connecting sliding groove 4239 is partially recessed to form a second groove 4240 adapted to the two second protruding posts 4443. With reference to FIG. 17 and FIG. 18. FIG. 17 is an enlarged view of a region QQ in FIG. 3. FIG. 18 is a cross-sectional view of FIG. 17 along a direction OO'. As shown in FIG. 15 to FIG. 18, when the concave gear 442, the first spring 443, and the damping swing arm 444 are sleeved on the pin shaft 441, two ends of the pin shaft 441 are exposed. The exposed portions of the pin shaft 441 are fixedly connected to the shaft cover 41, in other words, the damping mechanism 44 is fixedly connected to the shaft cover 41 through the pin shaft 441. The second protruding post 4443 is slided and rotated in the second groove 4240, so that the damping mechanism 44 is slidably and rotatably connected to the connecting member 423.

To ensure synchronization of two damping swing arms 444 located on a same pin shaft 441, a connection portion 445 is disposed between the two damping swing arms 444, and is configured to connect to the two damping swing arms 444.

Specifically, when the damping swing arm 444 is slidably and rotatably connected to the connecting member 423, a movement of the connecting member 423 is converted into a linear movement (a movement on the pin shaft 441 along the Y-axis direction) of the first spring 443 by using a cam surface (a contact surface between the concave gear 442 and the rotary annular cam 4441), to compress the first spring 443 and generate a damping force.

As can be learned from the foregoing content, the rotating shaft structure 40 uses three damping mechanisms 44, and the three damping mechanisms 44 are evenly distributed on the shaft cover 41. By using the damping mechanism 44 formed by three groups of concave-convex gears, the damping force of the rotating shaft structure 40 is increased to implement the folding and unfolding feel in a folding and unfolding process. In addition, a pressure on the cam surface of each damping mechanism 44 is evenly distributed, avoiding problems such as a relatively large pressure on the cam surface, easy abrasion of the cam surface, and a short service life. Besides, in this example, the damping mechanism 44 has a simple structure and low costs, and is easy to machine.

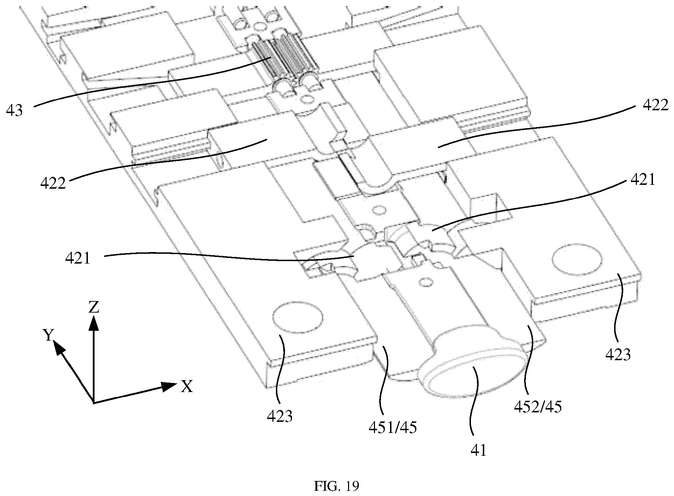

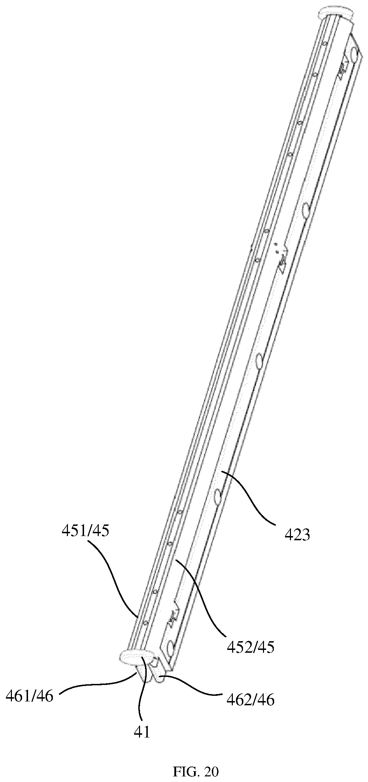

FIG. 19 is a diagram of a partial structure of a rotating shaft structure according to an embodiment of this application. To clearly show a position of the support door panel 45, the decorating door panel is not shown in FIG. 19. As shown in FIG. 7, FIG. 9, and FIG. 19, the first main swing member 4211 and the second main swing member 4212 of the main swing arm 421 each are provided with a fastening post 4213. An extension direction of the fastening post 4213 is opposite to a bending direction of the first main swing member 4211 and the second main swing member 4212. A first main swing member 4211 and a second main swing member 4212 of one main swing arm 421 in the main swing arm group are fixedly connected to one support door panel 45 by using fastening posts 4213, for example, are fixedly connected to the first support door panel 451. A first main swing member 4211 and a second main swing member 4212 of another main swing arm 421 in the main swing arm group are fixedly connected to another support door panel 45 by using fastening posts 4213, for example, are fixedly connected to the second support door panel 452. In this way, the two support door panels 45 are separately disposed on two sides of the shaft cover 41 along the X-axis direction. In other words, the support door panel 45 is fixedly connected to the main swing arm 421, and a movement of the main swing arm 421 controls a movement of the support door panel 45. The first display unit 10 is supported by the first support door panel 451 and the second support door panel 452. When the terminal is in the unfolded state, the first display unit 10 is supported to prevent the first display unit 10 from collapsing due to pressing. When the terminal is in the folded state (as shown in FIG. 20), the bending region of the first display unit 10 is supported to prevent the first display unit 10 from collapsing.

A material of the support door panel 45 is not limited in this embodiment of this application, and a person skilled in the art may select the material based on an actual situation. For example, the material of the support door panel 45 includes an ultra-high polymer material. When the material of the support door panel 45 is an ultra-high polymer material, the support door panel 45 may be integrally formed. In this way, a carrying capability of the support door panel 45 for the first display unit 10 can be improved, reliability of supporting the first display unit 10 can be improved, machining reliability of the support door panel 45 can be improved, and machining costs can be reduced.

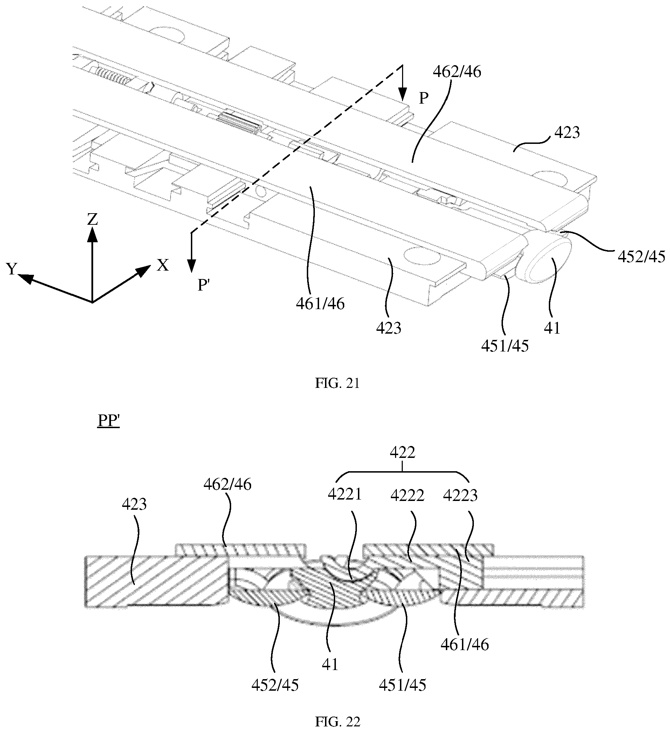

FIG. 21 is a diagram of a partial structure of a rotating shaft structure according to an embodiment of this application. FIG. 22 is a section view of FIG. 21 along a direction PP'. As shown in FIG. 21 and FIG. 22, the first decorating door panel 461 is fixedly connected to a sliding member 4222 of one secondary swing arm 422 in the secondary swing arm group, the second decorating door panel 462 is fixedly connected to a sliding member 4222 of another secondary swing arm 422 in the secondary swing arm group, and a movement of the secondary swing arm 422 controls a movement of the decorating door panel 46.

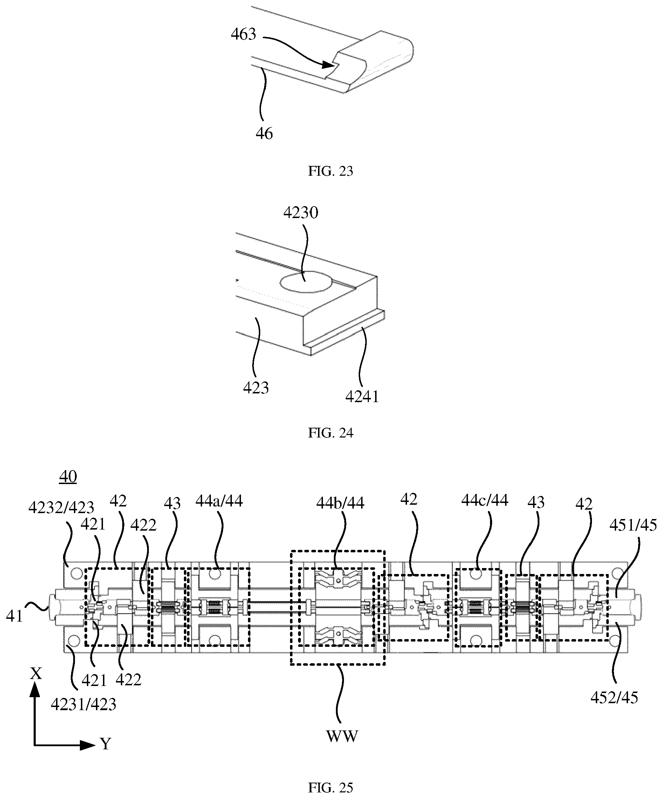

FIG. 23 is a diagram of a partial structure of a connecting member according to an embodiment of this application. FIG. 24 is a diagram of a partial structure of a decorating door panel according to an embodiment of this application. With reference to FIG. 23 and FIG. 24, along the Y-axis direction, two opposite ends of the decorating door panel 46 are partially bent, and a decorating sliding groove 463 is formed between a bent portion and an unbent portion; and correspondingly, along the Y-axis direction, two opposite ends of the connecting member 423 each are provided with a second protrusion 4241, and the second protrusion 4241 is located in the decorating sliding groove 463. When the movement of the secondary swing arm 422 controls the decorating door panel 46 to move, the second protrusion 4241 is slided in the decorating sliding groove 463. The first decorating door panel 461 and the second decorating door panel 462 can cover at least a part of the rotating mechanism 42, the synchronization mechanism 43, and the damping mechanism 44 to protect these structures.

As can be learned from the specific descriptions of these structures, the rotating shaft structure 40 provided in the embodiments of this application can increase the damping force of the damping mechanism. In addition, the damping mechanism not only can provide a flattening force, but also can provide a closing force, adjusting the folding and unfolding feel of the rotating shaft structure 40, helping improve user experience, and increasing a service life of the rotating shaft structure 40 when applied to an outward foldable terminal. In this way, a problem of severer abrasion caused by a relatively large pressure on the cam surface when a single damping mechanism 44 is used is avoided. Furthermore, the damping mechanism 44 has a simple structure and low costs. In addition, because the support door panel 45 is relatively flat and is integrally formed, machining reliability is improved, machining costs are reduced, the carrying capability of the support door panel 45 for the first display unit 10 is improved, and a problem such as a screen crease is ameliorated. In addition, the main swing arm 421, the secondary swing arm 422, and the synchronization mechanism 43 have simple structures and cooperate with each other to ensure bending reliability of the entire terminal, reduce a weight of the entire terminal, and reduce costs.

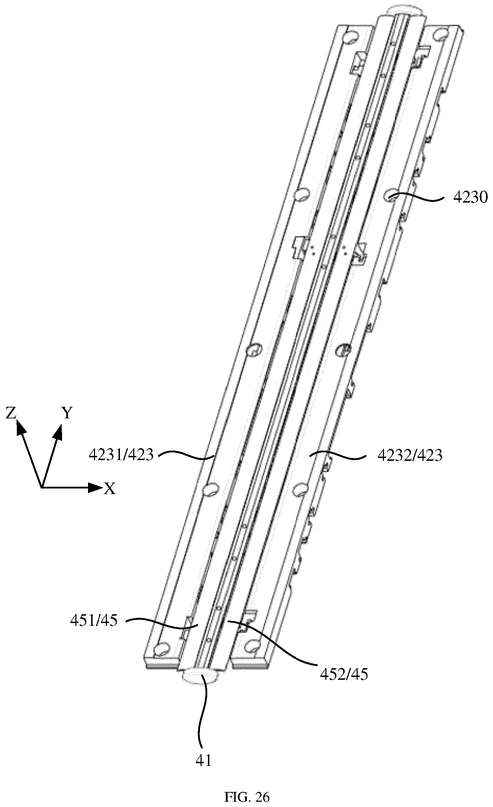

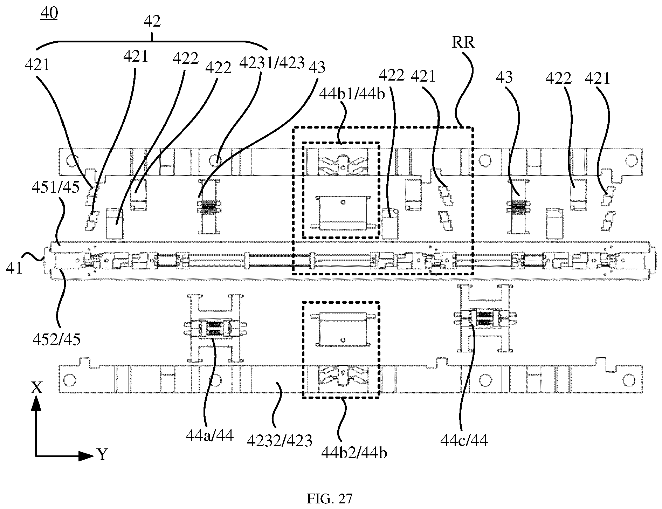

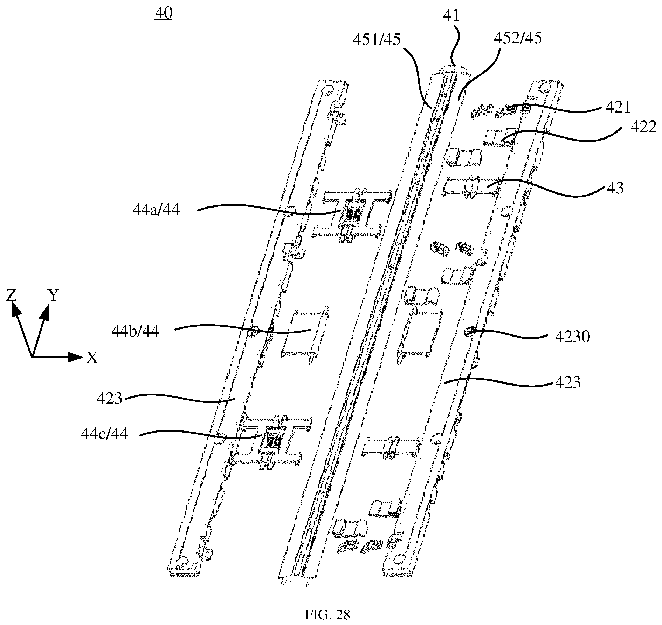

In another example, FIG. 25 is a diagram of a front surface structure of another rotating shaft structure according to an embodiment of this application; FIG. 26 is a diagram of a back surface structure of another rotating shaft structure according to an embodiment of this application; FIG. 27 is an exploded view of the rotating shaft structure shown in FIG. 25; and FIG. 28 is an exploded view of the rotating shaft structure shown in FIG. 26. It should be noted that none of FIG. 25, FIG. 26, FIG. 27, and FIG. 28 has shown the decorating door panel 46. It can be understood that during actual disposing, the rotating shaft structure in the embodiments of this application may include the decorating door panel 46. As shown in FIG. 25, FIG. 26, FIG. 27, and FIG. 28, a difference between this example and the foregoing example is that among three damping mechanisms 44, one damping mechanism 44 is different from the other two damping mechanisms 44. Specifically, the three damping mechanisms 44 include a first damping mechanism 44a, a second damping mechanism 44b, and a third damping mechanism 44c. Along a Y-axis direction, the first damping mechanism 44a, the second damping mechanism 44b, and the third damping mechanism 44c are sequentially disposed. The second damping mechanism 44b is located between the first damping mechanism 44a and the third damping mechanism 44c. The first damping mechanism 44a and the third damping mechanism 44c are, for example, the concave-convex gear damping mechanism in the foregoing example. For a specific structure of the damping mechanism, refer to the content in the foregoing example. Details are not described herein again. The following describes a specific structure of the second damping mechanism 44b.

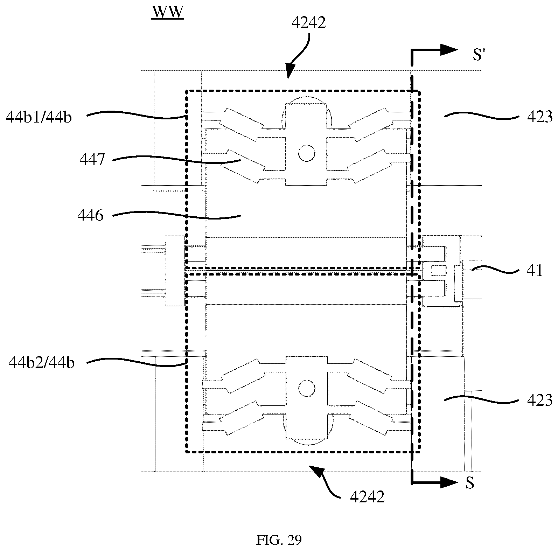

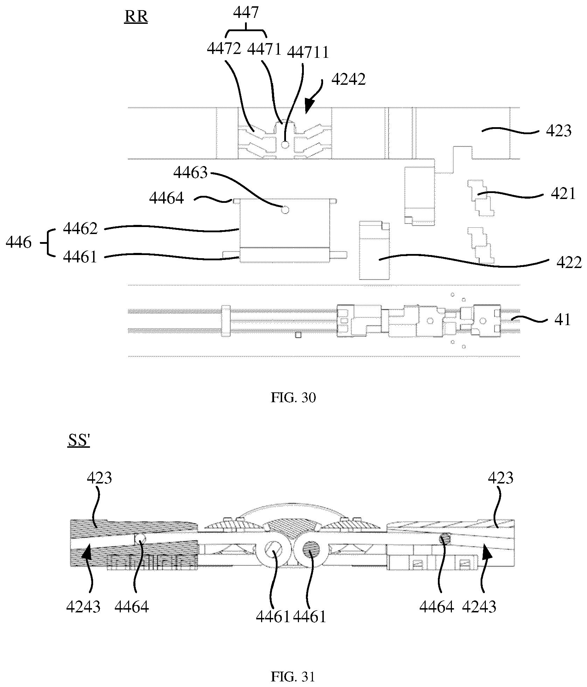

FIG. 29 is an enlarged view of a region WW in FIG. 25. FIG. 30 is an enlarged view of a region RR in FIG. 27. As shown in FIG. 29 and FIG. 30, the second damping mechanism 44b includes two smoothing members of a same structure. The two smoothing members are a first smoothing member 44b1 and a second smoothing member 44b2. For a purpose of distinction, the second damping mechanism 44b in this example is also referred to as a smoothing damping mechanism.

The smoothing member includes a smoothing swing arm 446 and a flexible unit 447. The smoothing swing arm 446 includes a rotating shaft 4461 and a sliding portion 4462 located on a side of the rotating shaft 4461. An upper surface of the sliding portion 4462 is provided with a limiting block 4463, and two side walls of an end of the sliding portion 4462 far away from the rotating shaft 4461 are provided with two third protruding posts 4464 extending along the Y-axis direction. Extension directions of two third protruding posts 4464 are opposite (to be specific, one extends along a +Y direction, and the other extends along a -Y direction). The flexible unit 447 includes a connecting rod 4471 and flexible beams 4472 located on two sides of the connecting rod 4471. The connecting rod 4471 is provided with a limiting hole 44711.

The shaft cover 41 is provided with rotating holes (not shown in the figure) adapted to the rotating shafts 4461. The rotating shafts 4461 of the smoothing swing arm 446 are inserted into the rotating holes of the shaft cover 41 to rotatably connect the second damping mechanism 44b to the shaft cover 41.

FIG. 31 is a cross-sectional view of FIG. 29 along a direction SS'. The connecting member 423 is provided with a fourth connecting sliding groove 4242, and a side wall of the fourth connecting sliding groove 4242 is partially recessed to form third grooves 4243 adapted to two third protruding posts 4464. The third protruding posts 4464 are located in the third grooves 4243. The flexible beams 4472 located on two sides of the connecting rod 4471 are separately fastened to a side wall of the fourth connecting sliding groove 4242, that is, an unrecessed region of the side wall, to fasten the flexible unit 447 to the connecting member 423. In addition, the limiting block 4463 of the smoothing swing arm 446 is clamped in the limiting hole 44711 of the flexible unit 447, so that the smoothing swing arm 446 is fixedly connected to the flexible unit 447. When the connecting member 423 is folded or unfolded with the first body 20 and the second body 30, the third protruding post 4464 is slided and rotated in the third groove 4243, so that the damping mechanism 44 is slidably and rotatably connected to the connecting member 423.

Specifically, in a folding or unfolding process of the rotating shaft structure 40, the connecting member 423 drives the sliding portion 4462 of the smoothing swing arm 446 to slide, so that the sliding portion 4462 drives the connecting rod 4471 to move up and down (vertical to the Y-axis direction) to compress the flexible beam 4472 to generate a damping force. At different folding or unfolding angles, the second damping mechanism 44b reaches a stable state, helping maintain a hovering, unfolded, or folded state of the rotating shaft structure 40.

For example, when the first body 20 and the second body 30 change from the folded state to the unfolded state, before an angle between a plane on which the first body 20 is located and a plane on which the second body 30 is located is less than a preset angle, the flexible beam 4472 buckles, enters a closing force interval, and generates a closing force, and the second damping mechanism 44b reaches a first stable state. In this case, if a user lets go, the first body 20 and the second body 30 return to initial positions, that is, return to the folded state. However, when the angle between the plane on which the first body 20 is located and the plane on which the second body 30 is located is the preset angle, the flexible beam 4472 is between the closing force interval and an unfolding force interval, and the second damping mechanism 44b reaches a balanced stable state. In this case, if the user lets go, the first body 20 and the second body 30 remain in the current positions, that is, the angle between the plane on which the first body 20 is located and the plane on which the second body 30 is located is still the preset angle. When the angle between the plane on which the first body 20 is located and the plane on which the second body 30 is greater than the preset angle, the flexible beam 4472 still buckles, enters the unfolding force interval, and generates an unfolding force, and the second damping mechanism 44b reaches a second stable state, so that the connecting member 423 is slided relative to the second damping mechanism 44b, helping unfold the first body 20 and the second body 30.

It should be noted that this example is described by using an example in which the rotating shaft structure 40 includes three damping mechanisms 44, the three damping mechanisms 44 includes two concave-convex gear damping mechanisms and one smoothing damping mechanism, and the smoothing damping mechanism is located between the two concave-convex gear damping mechanisms, but this shall not constitute any limitation to this application. A person skilled in the art may perform arrangement based on an actual situation. In another optional embodiment of this application, the rotating shaft structure 40 may further include three smoothing damping mechanisms, or include two smoothing damping mechanisms and one concave-convex gear damping mechanism, or so on. A specific disposing position and a specific connection relationship are the same as those in the foregoing examples. Details are not described herein again. For details, refer to the corresponding content in the foregoing two examples.

As can be learned from the specific descriptions of the foregoing structures, the rotating shaft structure 40 provided in the embodiments of this application can increase the damping force of the damping mechanism, and disposing of the second damping mechanism helps maintain the hovering, folded, and unfolded state of the rotating shaft structure 40, adjusting the folding and unfolding feel of the rotating shaft structure 40, and helping improve user experience. In addition, when the rotating shaft structure 40 is applied to an outward foldable terminal, the service life of the rotating shaft structure 40 can be increased. In this way, a problem of severer abrasion caused by a relatively large pressure on the cam surface when a single damping mechanism 44 is used is avoided. Furthermore, the damping mechanism 44 has a simple structure and low costs. In addition, because the support door panel 45 is relatively flat and is integrally formed, machining reliability is improved, machining costs are reduced, the carrying capability of the support door panel 45 for the first display unit 10 is improved, and a problem such as a screen crease is ameliorated. In addition, the main swing arm 421, the secondary swing arm 422, and the synchronization mechanism 43 have simple structures and cooperate with each other to ensure bending reliability of the entire terminal, reduce a weight of the entire terminal, and reduce costs.

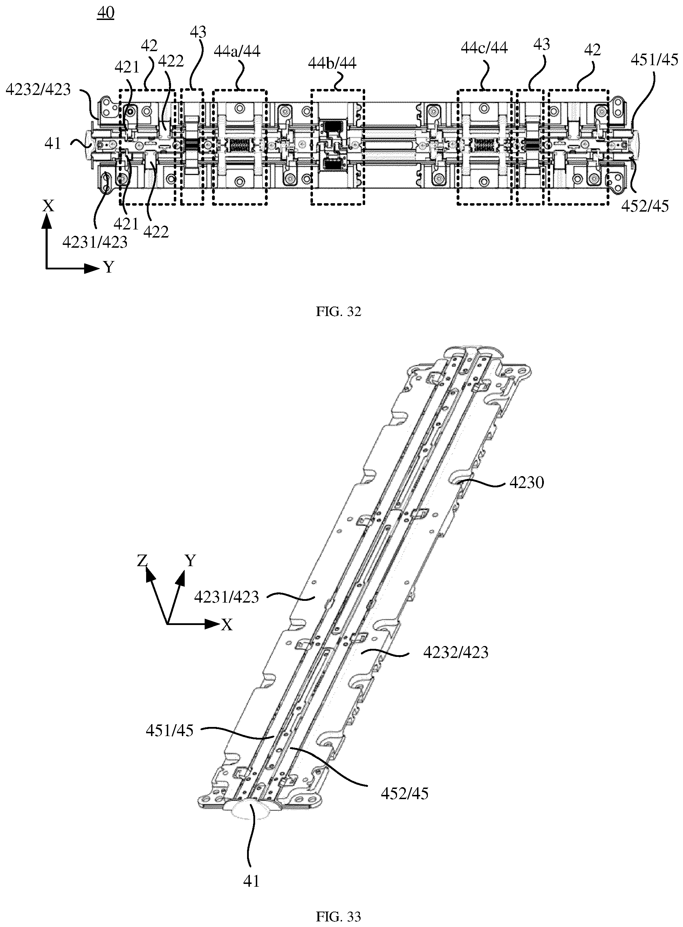

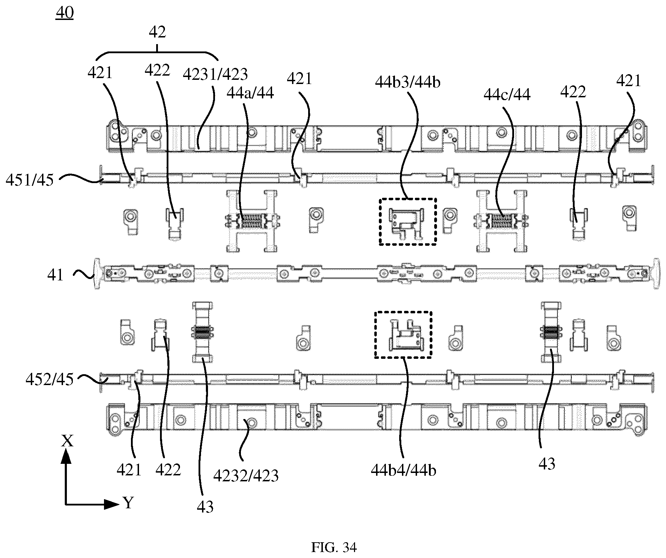

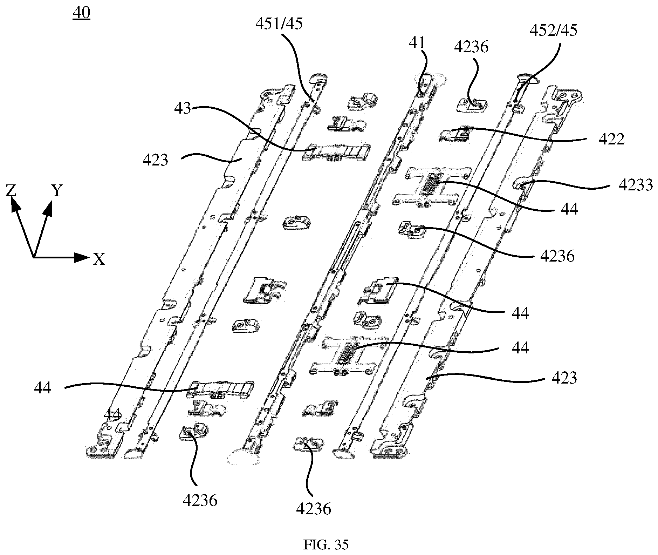

In still another example, FIG. 32 is a diagram of a front surface structure of another rotating shaft structure according to an embodiment of this application; FIG. 33 is a diagram of a back surface structure of another rotating shaft structure according to an embodiment of this application; FIG. 34 is an exploded view of the rotating shaft structure shown in FIG. 32; and FIG. 35 is an exploded view of the rotating shaft structure shown in FIG. 33. It should be noted that none of FIG. 32, FIG. 33, FIG. 34, and FIG. 35 has shown the decorating door panel 46. It can be understood that during actual disposing, the rotating shaft structure 40 in the embodiments of this application may include the decorating door panel 46. As shown in FIG. 32, FIG. 33, FIG. 34, and FIG. 35, a difference between this example and the first example is that among three damping mechanisms 44, one damping mechanism 44 is different from the other two damping mechanisms 44. Specifically, the three damping mechanisms 44 include a first damping mechanism 44a, a second damping mechanism 44b, and a third damping mechanism 44c. Along a Y-axis direction, the first damping mechanism 44a, the second damping mechanism 44b, and the third damping mechanism 44c are sequentially disposed. The second damping mechanism 44b is located between the first damping mechanism 44a and the third damping mechanism 44c. The first damping mechanism 44a and the third damping mechanism 44c are, for example, the concave-convex gear damping mechanism in the foregoing example. For a specific structure of the damping mechanism, refer to the content in the foregoing example. Details are not described herein again. The following describes a specific structure of the second damping mechanism 44b.

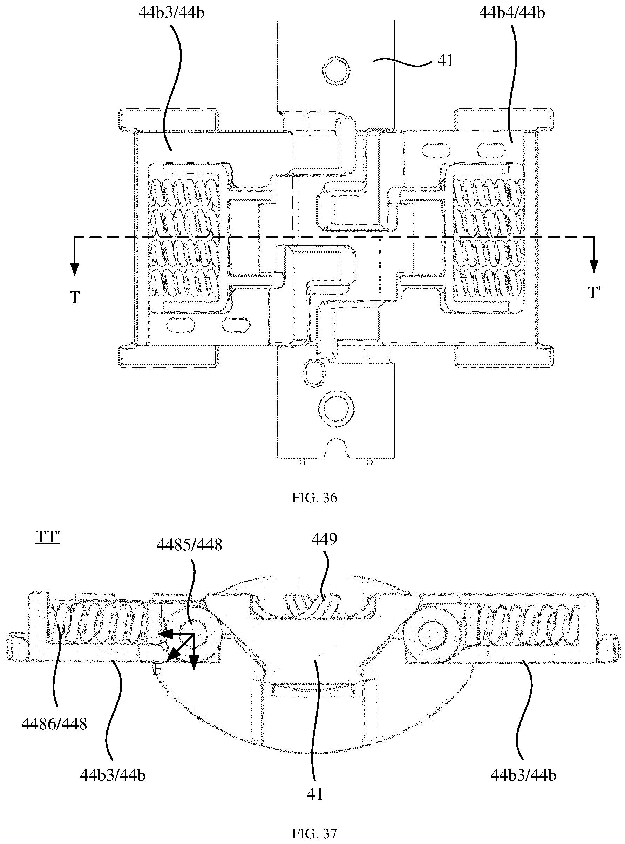

FIG. 36 is a partial diagram of a position relationship of a second damping mechanism and a shaft cover according to an embodiment of this application. FIG. 37 is a cross-sectional view of FIG. 36 along a direction TT'. As shown in FIG. 36 and FIG. 37, the second damping mechanism 44b includes two lateral members of a same structure. The two lateral members are a first lateral member 44b3 and a second lateral member 44b3. For a purpose of distinction, the second damping mechanism 44b in this example is also referred to as a lateral damping mechanism.

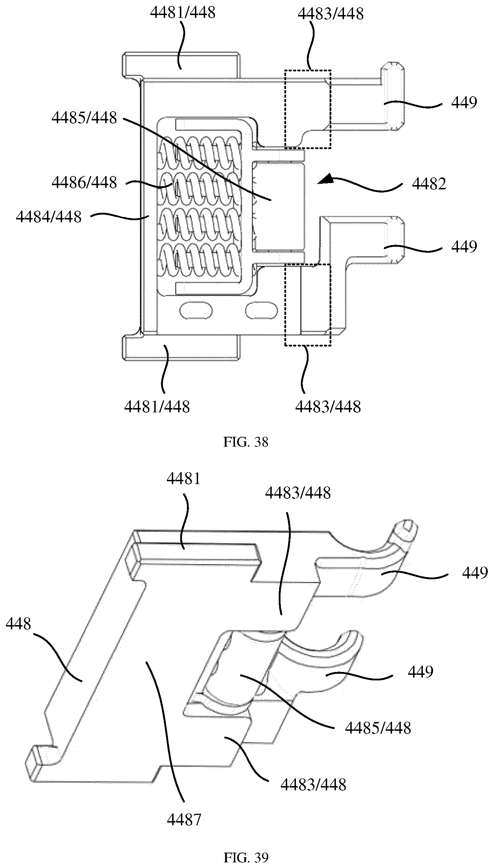

FIG. 38 is a top view of a second damping mechanism according to an embodiment of this application. FIG. 39 is a three-dimensional view of a second damping mechanism according to an embodiment of this application. As shown in FIG. 38 and FIG. 39, the lateral member includes a lateral swing arm 448 and a lateral rotating portion 449. A cross-sectional shape of the lateral rotating portion 449 is, for example, arc-shaped or approximately arc-shaped, that is, a projection of the lateral rotating portion 449 on a plane formed by the X-axis and the Y-axis is arc-shaped or approximately arc-shaped.

Along the Y-axis direction, two side walls of the lateral swing arm 448 each are provided with a second protruding strip 4481, the connecting member 423 is provided with a fifth connecting sliding groove (not shown in the figure), a side wall of the fifth connecting sliding groove is partially recessed to form a fourth groove (not shown in the figure) adapted to the two second protruding strips 4481, and the second protruding strips 4481 are located in the fourth groove. When the connecting member 423 is folded or unfolded with the first body 20 and the second body 30, the second protruding strips 4481 are slided in the fourth groove, so that the second damping mechanism 44 is slidably connected to the connecting member 423.

The shaft cover 41 is provided with a third shaft cover sliding groove (not shown in the figure) adapted to the lateral rotating portion 449. The lateral rotating portion 449 is located in the third shaft cover sliding groove, so that the second damping mechanism 44b is rotatably connected to the shaft cover 41. In this way, when the position of the shaft cover 41 remains unchanged, the lateral swing arm 448 can be rotated relative to the shaft cover 41.

For example, the lateral member includes two lateral rotating portions 449 that are spaced away from each other. The lateral swing arm 448 is of an unclosed annular structure, to be specific, the lateral swing arm 448 has an opening 4482. The opening 4482 is provided, so that the lateral swing arm 448 has two end portions 4483 that are spaced away from each other. The two lateral rotating portions 449 are respectively connected to the two end portions 4483 of the lateral swing arm 448. A part of the shaft cover 41 is located in a gap between the two lateral rotating portions 449.

The annular lateral swing arm 448 is provided with a support member 4484 and a roller 4485 rotatably connected to the support member 4484. At least one second spring 4486 is sleeved on the support member 4484. Two opposite ends of the second spring 4486 are respectively fixedly connected to the support member 4484 and the roller 4485. A side wall of the shaft cover 41 located in the gap between the two lateral rotating portions 449 is in contact with the roller 4485.

Optionally, to better support and protect the second spring 4486, a portion of the lateral swing arm 448 opposite to the second spring 4486 is provided with a bottom surface 4487. That is, in an unfolded state, a projection of the second spring 4486 on a plane formed by the X-axis and the Y-axis is located on a projection of the bottom surface 4487 on the plane formed by the X-axis and the Y-axis.

Specifically, when the connecting member 423 is folded or unfolded with the first body 20 and the second body 30, the connecting member 423 drives the lateral swing arm 448 to rotate relative to the shaft cover 41. The roller 4485 is moved around a side wall of the shaft cover 41. The shaft cover 41 squeezes the roller 4485, and the roller 4485 further compresses the second spring 4486. Correspondingly, a load F is applied to the roller 4485 to generate a damping force.

That is, in the three damping mechanisms provided in this embodiment of this application, the concave-convex gear damping mechanism provides a folding and unfolding feel force. A force between the roller and the shaft cover in the lateral damping mechanism avoids a problem that a closing force cannot be generated because the lateral damping mechanism has only a flattening force, improving an unfolding retention force of the rotating shaft structure. In this way, the foldable terminal has a better feel in a folding or unfolding process, helping improve user experience.

It should be noted that this example is described by using an example in which the rotating shaft structure 40 includes three damping mechanisms 44, the three damping mechanisms 44 includes two concave-convex gear damping mechanisms and one lateral damping mechanism, and the lateral damping mechanism is located between the two concave-convex gear damping mechanisms, but this shall not constitute any limitation to this application. A person skilled in the art may perform arrangement based on an actual situation. In another optional embodiment of this application, the rotating shaft structure 40 may further include two lateral damping mechanisms and one concave-convex gear damping mechanism, one smoothing damping mechanism and two lateral damping mechanisms, two smoothing damping mechanisms and one lateral damping mechanism, or one smoothing damping mechanism, one concave-convex gear damping mechanism, and one lateral damping mechanism. A specific disposing position and a specific connection relationship are the same as those in the foregoing examples. Details are not described herein again. For details, refer to the corresponding content in the foregoing two examples.

It should be noted that in the foregoing examples, for ease of preparing the connecting member 423, the connecting member 423 may be integrally formed (for example, the connecting member 423 in the first example and the second example), or the connecting member 423 may be formed by combining a plurality of structural members (for example, the plurality of structural members 4236 in the third example).

As can be learned from the specific descriptions of the foregoing structures, the rotating shaft structure 40 provided in the embodiments of this application can increase the damping force of the damping mechanism. The damping mechanism not only can generate a flattening force, but also can generate a closing force. The concave-convex gear damping mechanism provides a folding and unfolding feel of the rotating shaft structure 40. When the rotating shaft structure 40 is in the unfolded state, the lateral damping mechanism increases an unfolding retention force of the rotating shaft structure 40 by using an acting force between the roller 4485 and the shaft cover 41, helping improve user experience. When the rotating shaft structure 40 is applied to an outward foldable terminal, the service life of the rotating shaft structure 40 can be increased. In this way, a problem of severer abrasion caused by a relatively large pressure on the cam surface when a single damping mechanism 44 is used is avoided. Besides, a problem that the closing force cannot be generated when there is only a lateral damping mechanism can also be avoided. In addition, because the support door panel 45 is relatively flat and is integrally formed, machining reliability is improved, machining costs are reduced, the carrying capability of the support door panel 45 for the first display unit 10 is improved, and a problem such as a screen crease is ameliorated. In addition, the main swing arm 421, the secondary swing arm 422, and the synchronization mechanism 43 have simple structures and cooperate with each other to ensure bending reliability of the entire terminal, reduce a weight of the entire terminal, and reduce costs.

In conclusion, the rotating shaft structure 40 provided in the embodiments of this application increases the damping force of the damping mechanism by using three concave-convex gear damping mechanisms 44, three smoothing damping mechanisms 44, a combination of a concave-convex gear damping mechanism 44 and a smoothing damping mechanism 44, a combination of a lateral damping mechanism 44 and a concave-convex gear damping mechanism 44, or a combination of a lateral damping mechanism 44 and a smoothing damping mechanism 44, and adjusts the folding and unfolding feel of the rotating shaft structure 40, helping improve the user experience. In addition, because the support door panel 45 is relatively flat and is integrally formed, machining reliability is improved, machining costs are reduced, the carrying capability of the support door panel 45 for the first display unit 10 is improved, and a problem such as a screen crease is ameliorated. In addition, the main swing arm 421, the secondary swing arm 422, and the synchronization mechanism 43 have simple structures and cooperate with each other to ensure bending reliability of the entire terminal, reduce a weight of the entire terminal, and reduce costs.

The foregoing descriptions and embodiments are merely intended to describe the technical solutions of this application, rather than limit this application. Although this application is described in detail with reference to the foregoing embodiments, a person of ordinary skill in the art should understand that modifications can still be made to the technical solutions described in the foregoing embodiments without departing from the scope of the technical solutions of the embodiments of this application.

## Claims

1. A rotating shaft structure (40), applied to an outward foldable terminal, wherein the outward foldable terminal comprises a first body (20), a second body (30), and the rotating shaft structure (40) connecting the first body (20) to the second body (30), and the rotating shaft structure (40) comprises:
a shaft cover (41);
two connecting members (423), located on two sides of the shaft cover (41), and configured to respectively connect to the first body (20) and the second body (30);
a rotating mechanism (42), rotatably connected to the shaft cover (41) and slidably and rotatably connected to the connecting members (423), and configured to control movements of the connecting members (423);
a synchronization mechanism (43), rotatably connected to the shaft cover (41) and slidably and rotatably connected to the connecting members (423), and configured to synchronize rotation of the two connecting members (423); and
a plurality of damping mechanisms (44), wherein the plurality of damping mechanisms (44) comprise a concave-convex gear damping mechanism, wherein
the concave-convex gear damping mechanism comprises a pin shaft (441), a concave gear (442), a first spring (443) , and at least two damping swing arms (444), the pin shaft (441) is fixedly connected to the shaft cover (41), and the concave gear (442) and the first spring (443) are both sleeved on the pin shaft (441); the damping swing arm (444) comprises a rotating cam sleeved on the pin shaft (441) and neighboring to and in contact with the concave gear (442) and a swinging member (4442) located on a side of the rotating cam, and the swinging members (4442) of the two damping swing arms (444) are slidably and rotatably connected to the two connecting members (423); and when the swinging members (4442) and the connecting members (423) are slided and rotated, the first spring (443) is compressed and generates an axial squeezing force, applied between the concave gear (442) and the rotating cam to generate a damping force; and
wherein the synchronization mechanism (43) comprises two synchronization members (431), the synchronization member (431) comprises a synchronization swing arm (4311) and a gear (4312), the gears (4312) of the two synchronization members (431) mesh with each other, and the synchronization swing arms (4311) of the two synchronization members (431) are separately disposed on two sides of the two gears (4312) meshing with each other;
the gear (4312) is rotatably connected to the shaft cover (41) by using a gear shaft, two side walls of an end of the synchronization swing arm (4311) far away from the gear (4312) is provided with a first protruding post (43111); and
the connecting member (423) is provided with a third connecting sliding groove (4237) adapted to the synchronization swing arm (4311), a side wall of the third connecting sliding groove (4237) is partially recessed to form a first groove (4238) adapted to the first protruding post (43111), and the first protruding post (43111) is slided and rotated in the first groove (4238), so that the synchronization mechanism (43) is slidably and rotatably connected to the connecting member (423).

2. The rotating shaft structure (40) according to claim 1, wherein the plurality of damping mechanisms (44) further comprise a lateral damping mechanism; and the lateral damping mechanism comprises two lateral members, the lateral member comprises a lateral swing arm (448) and a lateral rotating portion (449), the lateral rotating portion (449) is rotatably connected to the shaft cover (41), and the lateral swing arms (448) of the two lateral members are respectively slidably connected to the two connecting members (423); and
the lateral swing arm (448) is provided with a support member (4484) and a roller (4485) rotatably connected to the support member (4484), at least one second spring (4486) is sleeved on the support member (4484), two opposite ends of the second spring (4486) are respectively fixedly connected to the support member (4484) and the roller (4485); and when an angle of a plane on which the two connecting members (423) are located is within a preset angle range, the roller (4485) is in contact with a side wall of the shaft cover (41), the shaft cover (41) squeezes the roller (4485), and the second spring (4486) is compressed to generate a damping force.

3. The rotating shaft structure (40) according to claim 1, wherein the rotating mechanism (42) comprises a main swing arm group, and the main swing arm group comprises two main swing arms (421) separately disposed on two sides of the shaft cover (41); and
the main swing arm (421) comprises a first main swing member (4211) and a second main swing member (4212) that are fixedly connected, the connecting member (423) is provided with a first connecting sliding groove (4233) adapted to the second main swing member (4212), the main swing arm (421) is rotatably connected to the connecting member (423) by using the second main swing member (4212), the shaft cover (41) is provided with a first shaft cover sliding groove (411) adapted to the first main swing member (4211), the main swing arm (421) is rotatably connected to the shaft cover (41) by using the first main swing member (4211), a position of the shaft cover (41) remains unchanged, the first main swing members (4211) of the two main swing arms (421) in the main swing arm group are rotated relative to the shaft cover (41) to drive, by using the second main swing members (4212) of the two main swing arms (421) in the main swing arm group, the two connecting members (423) to rotate.

4. The rotating shaft structure (40) according to claim 3, wherein cross-sectional shapes of the first main swing member (4211) and the second main swing member (4212) are both arc-shaped.

5. The rotating shaft structure (40) according to claim 3, wherein the rotating mechanism (42) further comprises a secondary swing arm group, the secondary swing arm group comprises two secondary swing arms (422) separately disposed on two sides of the shaft cover (41), the secondary swing arm (422) comprises a swing arm rotating member (4221) and a sliding member (4222), the swing arm rotating member (4221) is fastened to a side wall of the sliding member (4222), the sliding member (4222) is provided with a first protrusion (4223), and at least one swing arm sliding groove (4224) is formed between the first protrusion (4223) and the sliding member (4222); and
the connecting member (423) is provided with a second connecting sliding groove (4234) adapted to the sliding member (4222), a first protruding strip (4235) adapted to the swing arm sliding groove (4224) is formed on a side wall of the second connecting sliding groove (4234), the secondary swing arm (422) is slidably connected to the connecting member (423) by using the swing arm sliding groove (4224), the shaft cover (41) is provided with a second shaft cover sliding groove adapted to the swing arm rotating member (4221), the secondary swing arm (422) is rotatably connected to the shaft cover (41) by using the swing arm rotating member (4221), a position of the shaft cover (41) remains unchanged, the swing arm rotating members (4221) of the two secondary swing arms (422) in the secondary swing arm group are rotated relative to the shaft cover (41) to drive, by using the sliding members (4222) of the two secondary swing arms (422) in the secondary swing arm group, the two connecting members (423) to rotate.

6. The rotating shaft structure (40) according to any one of claims 1 to 5, wherein the foldable terminal further comprises a flexible screen, located on a side of the first body (20), the rotating shaft structure, and the second body (30); and
the rotating shaft structure (40) further comprises a support door panel (45), fixedly connected to the rotating mechanism (42) and rotating with rotation of the rotating mechanism (42), and the support door panel (45) is configured to support the flexible screen.

7. The rotating shaft structure (40) according to claim 6, wherein when the main swing arm (421) comprises the first main swing member (4211) and the second main swing member (4212), the first main swing member (4211) and the second main swing member (4212) each are provided with a fastening post (4213), and the main swing arm (421) is connected to the support door panel (45) by using the fastening posts (4213).

8. The rotating shaft structure (40) according to claim 6, wherein a material of the support door panel (45) comprises an ultra-high polymer material, and the support door panel (45) is integrally formed.

9. The rotating shaft structure (40) according to any one of claims 1 to 5, wherein the rotating shaft structure (40) further comprises a decorating door panel (46), fixedly connected to the rotating mechanism (42) and rotating with rotation of the rotating mechanism (42), and the decorating door panel (46) is configured to cover the rotating mechanism (42), the synchronization mechanism (43), and/or the damping mechanism (44).

10. The rotating shaft structure (40) according to claim 9, wherein when the secondary swing arm (422) comprises the swing arm rotating member (4221) and the sliding member (4222), the decorating door panel (46) is fixedly connected to a side of the sliding member (4222) facing away from the first protrusion (4223), so that the decorating door panel (46) is fixedly connected to the secondary swing arm (422); and
two opposite ends of the decorating door panel (46) are partially bent, a decorating sliding groove (463) is formed between a bent portion of the decorating door panel (46) and an unbent portion of the decorating door panel (46), two opposite ends of the connecting member (423) each are provided with a second protrusion (4241), the second protrusion (4241) is located in the decorating sliding groove (463), and the decorating door panel (46) is slidably connected to the connecting member (423) through the decorating sliding groove (463).

11. The rotating shaft structure (40) according to claim 9, wherein a material of the decorating door panel (46) comprises an ultra-high polymer material, and the decorating door panel (46) is integrally formed.

12. The rotating shaft structure (40) according to claim 1, wherein there are two pin shafts (441), two concave gears (442), two first springs, and four damping swing arms (444);
the two pin shafts (441) are arranged side by side along a first direction, the pin shaft (441) extends along a second direction, the concave gear (442) has two concave gear holes (4421), the two concave gear holes (4421) are arranged side by side along the first direction, the concave gear (442) is separately sleeved on the two pin shafts (441) through the two concave gear holes (4421), there is a gap between the two concave gears (442), the two first springs are respectively sleeved on the two pin shafts (441) and are separately located in the gap between the two concave gears (442), the rotating cams of the two damping swing arms (444) are disposed neighboring to one of the concave gears (442) and are located on a side of the concave gear (442) facing away from the first spring along the second direction, and the rotating cams of other two damping swing arms (444) are disposed neighboring to the other concave gear (442) and are located on a side of the concave gear (442) facing away from the first spring along the second direction; and
two side walls of an end of the swinging member (4442) far away from the rotating cam are provided with a second protruding post (4443), the connecting member (423) is provided with a fifth connecting sliding groove (4239) adapted to the damping swing arm (444), a side wall of the fifth connecting sliding groove (4239) is partially recessed to form a second groove (4240) adapted to the second protruding post (4443), and the second protruding post (4443) is slided and rotated in the second groove (4240), so that the damping mechanism (44) is slidably and rotatably connected to the connecting member (423), wherein
the first direction is a direction from the first body (20) to the second body (30), and the second direction is an axial direction of the rotating shaft structure (40).

13. The rotating shaft structure (40) according to claim 12, wherein a connection portion (445) is disposed between two damping swing arms (444) located on the same pin shaft (441), and two ends of the connection portion (445) are respectively fixedly connected to the two damping swing arms (444).

14. A foldable terminal, wherein the foldable terminal is an outward foldable terminal, and the outward foldable terminal comprises the rotating shaft structure (40) according to any one of claims 1 to 13.

## Patentansprüche

1. Eine Drehwellenstruktur (40), angewendet auf ein nach außen faltbares Endgerät, wobei das nach außen faltbare Endgerät einen ersten Körper (20), einen zweiten Körper (30) und die Drehwellenstruktur (40), welche den ersten Körper (20) mit dem zweiten Körper (30) verbindet, umfasst, und die Drehwellenstruktur (40) umfasst:
eine Wellenabdeckung (41);
zwei Verbindungselemente (423), die an zwei Seiten der Wellenabdeckung (41) angeordnet und dazu konfiguriert sind, jeweils mit dem ersten Körper (20) und dem zweiten Körper (30) zu verbinden;
einen Drehmechanismus (42), der drehbar mit der Wellenabdeckung (41) verbunden und gleitend sowie drehbar mit den Verbindungselementen (423) verbunden ist und dazu konfiguriert ist, Bewegungen der Verbindungselemente (423) zu steuern;
einen Synchronisationsmechanismus (43), der drehbar mit der Wellenabdeckung (41) verbunden und gleitend sowie drehbar mit den Verbindungselementen (423) verbunden ist und dazu konfiguriert ist, die Drehung der beiden Verbindungselemente (423) zu synchronisieren; und
eine Mehrzahl von Dämpfungsmechanismen (44), wobei die Mehrzahl der Dämpfungsmechanismen (44) einen konkav-konvexen Zahnrad-Dämpfungsmechanismus umfasst, wobei
der konkav-konvexe Zahnrad-Dämpfungsmechanismus einen Bolzenschaft (441), ein konkaves Zahnrad (442), eine erste Feder (443) und mindestens zwei Dämpfungsschwingarme (444) umfasst, wobei der Bolzenschaft (441) fest mit der Wellenabdeckung (41) verbunden ist und das konkave Zahnrad (442) sowie die erste Feder (443) beide auf den Bolzenschaft (441) aufgesteckt sind; der Dämpfungsschwingarm (444) einen rotierenden Nocken umfasst, der auf den Bolzenschaft (441) aufgesteckt ist und benachbart zu und in Kontakt mit dem konkaven Zahnrad (442) steht, sowie ein Schwenkelement (4442), das sich auf einer Seite des rotierenden Nockens befindet, wobei die Schwenkelemente (4442) der beiden Dämpfungsschwingarme (444) gleitend und drehbar mit den beiden Verbindungselementen (423) verbunden sind; und wenn die Schwenkelemente (4442) und die Verbindungselemente (423) gleiten und sich drehen, wird die erste Feder (443) komprimiert und erzeugt eine axiale Druckkraft, die zwischen dem konkaven Zahnrad (442) und dem rotierenden Nocken ausgeübt wird, um eine Dämpfungskraft zu erzeugen; und
wobei der Synchronisationsmechanismus (43) zwei Synchronisationselemente (431) umfasst, wobei das Synchronisationselement (431) einen Synchronisationsschwingarm (4311) und ein Zahnrad (4312) umfasst, wobei die Zahnräder (4312) der beiden Synchronisationselemente (431) miteinander kämmen und die Synchronisationsschwingarme (4311) der beiden Synchronisationselemente (431) separat an zwei Seiten der beiden miteinander kämmenden Zahnräder (4312) angeordnet sind;
das Zahnrad (4312) unter Verwendung einer Zahnradwelle drehbar mit der Wellenabdeckung (41) verbunden ist und zwei Seitenwände eines Endes des Synchronisationsschwingarms (4311), das vom Zahnrad (4312) entfernt ist, mit einem ersten vorstehenden Stift (43111) versehen sind; und
Das Verbindungselement (423) ist mit einer dritten Gleitnut (4237) versehen, die an den Synchronisationsschwingarm (4311) angepasst ist, wobei eine Seitenwand der dritten Gleitnut (4237) teilweise vertieft ist, um eine erste Nut (4238) zu bilden, die an den ersten vorspringenden Zapfen (43111) angepasst ist, und der erste vorspringende Zapfen (43111) in der ersten Nut (4238) gleitend und drehbar gelagert ist, sodass der Synchronisationsmechanismus (43) gleitend und drehbar mit dem Verbindungselement (423) verbunden ist.

2. Die Drehschaftstruktur (40) nach Anspruch 1, wobei die Vielzahl an Dämpfungsmechanismen (44) ferner einen lateralen Dämpfungsmechanismus umfasst; und der laterale Dämpfungsmechanismus zwei laterale Elemente umfasst, wobei das laterale Element einen lateralen Schwingarm (448) und einen lateralen Drehbereich (449) umfasst, wobei der laterale Drehbereich (449) drehbar mit der Schaftabdeckung (41) verbunden ist und die lateralen Schwingarme (448) der zwei lateralen Elemente jeweils gleitend mit den zwei Verbindungselementen (423) verbunden sind; und
der laterale Schwingarm (448) mit einem Stützelement (4484) und einer Rolle (4485) versehen ist, die drehbar mit dem Stützelement (4484) verbunden ist, wobei mindestens eine zweite Feder (4486) auf das Stützelement (4484) aufgesteckt ist, wobei zwei gegenüberliegende Enden der zweiten Feder (4486) jeweils fest mit dem Stützelement (4484) und der Rolle (4485) verbunden sind; und wenn ein Winkel einer Ebene, auf der sich die zwei Verbindungselemente (423) befinden, innerhalb eines voreingestellten Winkelbereichs liegt, die Rolle (4485) in Kontakt mit einer Seitenwand der Schaftabdeckung (41) steht, die Schaftabdeckung (41) die Rolle (4485) zusammendrückt und die zweite Feder (4486) komprimiert wird, um eine Dämpfungskraft zu erzeugen.

3. Die Drehschaftstruktur (40) nach Anspruch 1, wobei der Drehmechanismus (42) eine Hauptschwingarmgruppe umfasst und die Hauptschwingarmgruppe zwei Hauptschwingarme (421) umfasst, die separat auf zwei Seiten der Schaftabdeckung (41) angeordnet sind; und
Der Hauptschwingarm (421) umfasst ein erstes Hauptschwingelement (4211) und ein zweites Hauptschwingelement (4212), die fest miteinander verbunden sind, wobei das Verbindungselement (423) mit einer ersten Verbindungsgleitnut (4233) versehen ist, die an das zweite Hauptschwingelement (4212) angepasst ist, wobei der Hauptschwingarm (421) mittels des zweiten Hauptschwingelements (4212) drehbar mit dem Verbindungselement (423) verbunden ist, wobei die Wellenabdeckung (41) mit einer ersten Wellenabdeckungs-Gleitnut (411) versehen ist, die an das erste Hauptschwingelement (4211) angepasst ist, wobei der Hauptschwingarm (421) mittels des ersten Hauptschwingelements (4211) drehbar mit der Wellenabdeckung (41) verbunden ist, wobei eine Position der Wellenabdeckung (41) unverändert bleibt, wobei die ersten Hauptschwingelemente (4211) der zwei Hauptschwingarme (421) in der Hauptschwingarmgruppe relativ zu der Wellenabdeckung (41) gedreht werden, um mittels der zweiten Hauptschwingelemente (4212) der zwei Hauptschwingarme (421) in der Hauptschwingarmgruppe die zwei Verbindungselemente (423) zu einer Drehbewegung anzutreiben.

4. Drehwellenstruktur (40) nach Anspruch 3, wobei die Querschnittsformen des ersten Hauptschwingelements (4211) und des zweiten Hauptschwingelements (4212) beide bogenförmig sind.

5. Drehwellenstruktur (40) nach Anspruch 3, wobei der Drehmechanismus (42) ferner eine sekundäre Schwingarmgruppe umfasst, wobei die sekundäre Schwingarmgruppe zwei sekundäre Schwingarme (422) umfasst, die separat an zwei Seiten der Wellenabdeckung (41) angeordnet sind, wobei der sekundäre Schwingarm (422) ein Schwingarm-Drehelement (4221) und ein Gleitelement (4222) umfasst, wobei das Schwingarm-Drehelement (4221) an einer Seitenwand des Gleitelements (4222) befestigt ist, wobei das Gleitelement (4222) mit einem ersten Vorsprung (4223) versehen ist und wobei zwischen dem ersten Vorsprung (4223) und dem Gleitelement (4222) mindestens eine Schwingarm-Gleitnut (4224) ausgebildet ist; und
wobei das Verbindungselement (423) mit einer zweiten Verbindungsgleitnut (4234) versehen ist, die an das Gleitelement (4222) angepasst ist, wobei an einer Seitenwand der zweiten Verbindungsgleitnut (4234) ein erster vorstehender Streifen (4235) ausgebildet ist, der an die Schwingarm-Gleitnut (4224) angepasst ist, wobei der sekundäre Schwingarm (422) mittels der Schwingarm-Gleitnut (4224) gleitend mit dem Verbindungselement (423) verbunden ist, wobei die Wellenabdeckung (41) mit einer zweiten Wellenabdeckungs-Gleitnut versehen ist, die an das Schwingarm-Drehelement (4221) angepasst ist, wobei der sekundäre Schwingarm (422) mittels des Schwingarm-Drehelements (4221) drehbar mit der Wellenabdeckung (41) verbunden ist, wobei eine Position der Wellenabdeckung (41) unverändert bleibt, wobei die Schwingarm-Drehelemente (4221) der zwei sekundären Schwingarme (422) in der sekundären Schwingarmgruppe relativ zu der Wellenabdeckung (41) gedreht werden, um mittels der Gleitelemente (4222) der zwei sekundären Schwingarme (422) in der sekundären Schwingarmgruppe die zwei Verbindungselemente (423) zu einer Drehbewegung anzutreiben.

6. Drehwellenstruktur (40) nach einem der Ansprüche 1 bis 5, wobei das faltbare Endgerät ferner einen flexiblen Bildschirm umfasst, der auf einer Seite des ersten Körpers (20), der Drehwellenstruktur und des zweiten Körpers (30) angeordnet ist; und
die Drehwellenstruktur (40) ferner ein Stütztürpaneel (45) umfasst, das fest mit dem Drehmechanismus (42) verbunden ist und sich mit der Drehung des Drehmechanismus (42) mitdreht, und das Stütztürpaneel (45) dazu konfiguriert ist, den flexiblen Bildschirm zu stützen.

7. Drehwellenstruktur (40) nach Anspruch 6, wobei, wenn der Hauptschwenkarm (421) das erste Hauptschwenkelement (4211) und das zweite Hauptschwenkelement (4212) umfasst, das erste Hauptschwenkelement (4211) und das zweite Hauptschwenkelement (4212) jeweils mit einem Befestigungszapfen (4213) versehen sind und der Hauptschwenkarm (421) mittels der Befestigungszapfen (4213) mit dem Stütztürpaneel (45) verbunden ist.

8. Drehwellenstruktur (40) nach Anspruch 6, wobei ein Material des Stütztürpaneels (45) ein ultrahochmolekulares Material umfasst und das Stütztürpaneel (45) einstückig ausgebildet ist.

9. Drehwellenstruktur (40) nach einem der Ansprüche 1 bis 5, wobei die Drehwellenstruktur (40) ferner ein Dekortürpaneel (46) umfasst, das fest mit dem Drehmechanismus (42) verbunden ist und sich mit der Drehung des Drehmechanismus (42) mitdreht, und das Dekortürpaneel (46) dazu konfiguriert ist, den Drehmechanismus (42), den Synchronisationsmechanismus (43) und/oder den Dämpfungsmechanismus (44) abzudecken.

10. Drehwellenstruktur (40) nach Anspruch 9, wobei, wenn der sekundäre Schwenkarm (422) das Schwenkarm-Drehelement (4221) und das Schiebeelement (4222) umfasst, das Dekortürpaneel (46) fest mit einer Seite des Schiebeelements (4222) verbunden ist, die dem ersten Vorsprung (4223) abgewandt ist, sodass das Dekortürpaneel (46) fest mit dem sekundären Schwenkarm (422) verbunden ist; und
zwei gegenüberliegende Enden des Dekortürpaneels (46) teilweise gebogen sind, eine Dekor-Gleitnut (463) zwischen einem gebogenen Abschnitt des Dekortürpaneels (46) und einem nicht gebogenen Abschnitt des Dekortürpaneels (46) ausgebildet ist, zwei gegenüberliegende Enden des Verbindungselements (423) jeweils mit einem zweiten Vorsprung (4241) versehen sind, der zweite Vorsprung (4241) in der Dekor-Gleitnut (463) angeordnet ist und das Dekortürpaneel (46) durch die Dekor-Gleitnut (463) gleitend mit dem Verbindungselement (423) verbunden ist.

11. Drehwellenstruktur (40) nach Anspruch 9, wobei ein Material des Dekortürpaneels (46) ein ultrahochmolekulares Material umfasst und das Dekortürpaneel (46) einstückig ausgebildet ist.

12. Die Drehwellenstruktur (40) nach Anspruch 1, wobei zwei Stiftwellen (441), zwei konkave Zahnräder (442), zwei erste Federn und vier dämpfende Schwingarme (444) vorhanden sind;
wobei die beiden Stiftwellen (441) nebeneinander entlang einer ersten Richtung angeordnet sind, sich die Stiftwelle (441) entlang einer zweiten Richtung erstreckt, das konkave Zahnrad (442) zwei konkave Zahnradlöcher (4421) aufweist, die beiden konkaven Zahnradlöcher (4421) nebeneinander entlang der ersten Richtung angeordnet sind, das konkave Zahnrad (442) separat über die beiden konkaven Zahnradlöcher (4421) auf die beiden Stiftwellen (441) aufgesteckt ist, ein Spalt zwischen den beiden konkaven Zahnrädern (442) vorhanden ist, die beiden ersten Federn jeweils auf die beiden Stiftwellen (441) aufgesteckt und separat in dem Spalt zwischen den beiden konkaven Zahnrädern (442) angeordnet sind, die rotierenden Nocken der beiden dämpfenden Schwingarme (444) benachbart zu einem der konkaven Zahnräder (442) angeordnet sind und sich auf einer Seite des konkaven Zahnrads (442) befinden, die entlang der zweiten Richtung von der ersten Feder abgewandt ist, und die rotierenden Nocken der anderen beiden dämpfenden Schwingarme (444) benachbart zu dem anderen konkaven Zahnrad (442) angeordnet sind und sich auf einer Seite des konkaven Zahnrads (442) befinden, die entlang der zweiten Richtung von der ersten Feder abgewandt ist; und
wobei zwei Seitenwände eines Endes des Schwingelements (4442), das von der rotierenden Nocke entfernt ist, mit einem zweiten vorstehenden Stift (4443) versehen sind, das Verbindungselement (423) mit einer fünften Verbindungsgleitnut (4239) versehen ist, die an den dämpfenden Schwingarm (444) angepasst ist, eine Seitenwand der fünften Verbindungsgleitnut (4239) teilweise vertieft ist, um eine zweite Nut (4240) zu bilden, die an den zweiten vorstehenden Stift (4443) angepasst ist, und der zweite vorstehende Stift (4443) in der zweiten Nut (4240) gleitet und rotiert, sodass der Dämpfungsmechanismus (44) gleitend und drehbar mit dem Verbindungselement (423) verbunden ist, wobei
die erste Richtung eine Richtung vom ersten Körper (20) zum zweiten Körper (30) ist und die zweite Richtung eine axiale Richtung der Drehwellenstruktur (40) ist.

13. Die Drehwellenstruktur (40) nach Anspruch 12, wobei ein Verbindungsabschnitt (445) zwischen zwei dämpfenden Schwingarmen (444) angeordnet ist, die sich auf derselben Stiftwelle (441) befinden, und zwei Enden des Verbindungsabschnitts (445) jeweils fest mit den beiden dämpfenden Schwingarmen (444) verbunden sind.

14. Ein faltbares Endgerät, wobei das faltbare Endgerät ein nach außen faltbares Endgerät ist und das nach außen faltbare Endgerät die Drehwellenstruktur (40) nach einem der Ansprüche 1 bis 13 umfasst.

## Revendications

1. Structure d'arbre rotatif (40), appliquée à un terminal pliable vers l'extérieur, dans laquelle le terminal pliable vers l'extérieur comprend un premier corps (20), un second corps (30) et la structure d'arbre rotatif (40) reliant le premier corps (20) au second corps (30), et la structure d'arbre rotatif (40) comprend :
un couvercle d'arbre (41) ;
deux éléments de liaison (423), situés sur deux côtés du couvercle d'arbre (41), et configurés pour être reliés respectivement au premier corps (20) et au second corps (30) ;
un mécanisme rotatif (42), relié de manière rotative au couvercle d'arbre (41) et relié de manière coulissante et rotative aux éléments de liaison (423), et configuré pour commander les mouvements des éléments de liaison (423) ;
un mécanisme de synchronisation (43), relié de manière rotative au couvercle d'arbre (41) et relié de manière coulissante et rotative aux éléments de liaison (423), et configuré pour synchroniser la rotation des deux éléments de liaison (423) ; et
une pluralité de mécanismes d'amortissement (44), dans laquelle la pluralité de mécanismes d'amortissement (44) comprend un mécanisme d'amortissement à engrenage concave-convexe, dans laquelle
le mécanisme d'amortissement à engrenage concave-convexe comprend un axe de pivot (441), un engrenage concave (442), un premier ressort (443) et au moins deux bras oscillants d'amortissement (444), l'axe de pivot (441) est relié de manière fixe au couvercle d'arbre (41), et l'engrenage concave (442) et le premier ressort (443) sont tous deux emmanchés sur l'axe de pivot (441) ; le bras oscillant d'amortissement (444) comprend une came rotative emmanchée sur l'axe de pivot (441) et voisine de et en contact avec l'engrenage concave (442) et un élément oscillant (4442) situé sur un côté de la came rotative, et les éléments oscillants (4442) des deux bras oscillants d'amortissement (444) sont reliés de manière coulissante et rotative aux deux éléments de liaison (423) ; et lorsque les éléments oscillants (4442) et les éléments de liaison (423) coulissent et tournent, le premier ressort (443) est comprimé et génère une force de compression axiale, appliquée entre l'engrenage concave (442) et la came rotative pour générer une force d'amortissement ; et
dans laquelle le mécanisme de synchronisation (43) comprend deux éléments de synchronisation (431), l'élément de synchronisation (431) comprend un bras oscillant de synchronisation (4311) et un engrenage (4312), les engrenages (4312) des deux éléments de synchronisation (431) s'engrènent l'un avec l'autre, et les bras oscillants de synchronisation (4311) des deux éléments de synchronisation (431) sont disposés séparément sur deux côtés des deux engrenages (4312) s'engrenant l'un avec l'autre ;
l'engrenage (4312) est relié de manière rotative au couvercle d'arbre (41) au moyen d'un arbre d'engrenage, deux parois latérales d'une extrémité du bras oscillant de synchronisation (4311) éloignée de l'engrenage (4312) sont pourvues d'un premier montant en saillie (43111) ; et
l'élément de liaison (423) est pourvu d'une troisième rainure coulissante de liaison (4237) adaptée au bras oscillant de synchronisation (4311), une paroi latérale de la troisième rainure coulissante de liaison (4237) est partiellement en retrait pour former une première rainure (4238) adaptée à la première colonne saillante (43111), et la première colonne saillante (43111) coulisse et pivote dans la première rainure (4238), de sorte que le mécanisme de synchronisation (43) soit relié de manière coulissante et rotative à l'élément de liaison (423).

2. La structure d'arbre rotatif (40) selon la revendication 1, dans laquelle la pluralité de mécanismes d'amortissement (44) comprennent en outre un mécanisme d'amortissement latéral ; et le mécanisme d'amortissement latéral comprend deux éléments latéraux, l'élément latéral comprend un bras oscillant latéral (448) et une partie rotative latérale (449), la partie rotative latérale (449) est reliée de manière rotative au couvercle d'arbre (41), et les bras oscillants latéraux (448) des deux éléments latéraux sont respectivement reliés de manière coulissante aux deux éléments de liaison (423) ; et
le bras oscillant latéral (448) est pourvu d'un élément de support (4484) et d'un rouleau (4485) relié de manière rotative à l'élément de support (4484), au moins un second ressort (4486) est emmanché sur l'élément de support (4484), deux extrémités opposées du second ressort (4486) sont respectivement fixées à l'élément de support (4484) et au rouleau (4485) ; et lorsqu'un angle d'un plan sur lequel les deux éléments de liaison (423) sont situés est compris dans une plage d'angle prédéfinie, le rouleau (4485) est en contact avec une paroi latérale du couvercle d'arbre (41), le couvercle d'arbre (41) comprime le rouleau (4485), et le second ressort (4486) est comprimé pour générer une force d'amortissement.

3. La structure d'arbre rotatif (40) selon la revendication 1, dans laquelle le mécanisme rotatif (42) comprend un groupe de bras oscillants principaux, et le groupe de bras oscillants principaux comprend deux bras oscillants principaux (421) disposés séparément sur deux côtés du couvercle d'arbre (41) ; et
le bras oscillant principal (421) comprend un premier élément oscillant principal (4211) et un second élément oscillant principal (4212) qui sont reliés de manière fixe, l'élément de liaison (423) est pourvu d'une première rainure de coulissement de liaison (4233) adaptée au second élément oscillant principal (4212), le bras oscillant principal (421) est relié de manière rotative à l'élément de liaison (423) au moyen du second élément oscillant principal (4212), le couvercle d'arbre (41) est pourvu d'une première rainure de coulissement de couvercle d'arbre (411) adaptée au premier élément oscillant principal (4211), le bras oscillant principal (421) est relié de manière rotative au couvercle d'arbre (41) au moyen du premier élément oscillant principal (4211), une position du couvercle d'arbre (41) reste inchangée, les premiers éléments oscillants principaux (4211) des deux bras oscillants principaux (421) dans le groupe de bras oscillants principaux sont mis en rotation par rapport au couvercle d'arbre (41) pour entraîner, au moyen des seconds éléments oscillants principaux (4212) des deux bras oscillants principaux (421) du groupe de bras oscillants principaux, la rotation des deux éléments de liaison (423).

4. Structure d'arbre rotatif (40) selon la revendication 3, dans laquelle les formes en coupe transversale du premier élément oscillant principal (4211) et du second élément oscillant principal (4212) sont toutes deux en forme d'arc.

5. Structure d'arbre rotatif (40) selon la revendication 3, dans laquelle le mécanisme rotatif (42) comprend en outre un groupe de bras oscillants secondaires, le groupe de bras oscillants secondaires comprend deux bras oscillants secondaires (422) disposés séparément sur deux côtés du couvercle d'arbre (41), le bras oscillant secondaire (422) comprend un élément rotatif de bras oscillant (4221) et un élément coulissant (4222), l'élément rotatif de bras oscillant (4221) est fixé à une paroi latérale de l'élément coulissant (4222), l'élément coulissant (4222) est pourvu d'une première saillie (4223), et au moins une rainure de coulissement de bras oscillant (4224) est formée entre la première saillie (4223) et l'élément coulissant (4222) ; et
l'élément de liaison (423) est pourvu d'une seconde rainure de coulissement de liaison (4234) adaptée à l'élément coulissant (4222), une première bande saillante (4235) adaptée à la rainure de coulissement de bras oscillant (4224) est formée sur une paroi latérale de la seconde rainure de coulissement de liaison (4234), le bras oscillant secondaire (422) est relié de manière coulissante à l'élément de liaison (423) au moyen de la rainure de coulissement de bras oscillant (4224), le couvercle d'arbre (41) est pourvu d'une seconde rainure de coulissement de couvercle d'arbre adaptée à l'élément rotatif de bras oscillant (4221), le bras oscillant secondaire (422) est relié de manière rotative au couvercle d'arbre (41) au moyen de l'élément rotatif de bras oscillant (4221), une position du couvercle d'arbre (41) reste inchangée, les éléments rotatifs de bras oscillant (4221) des deux bras oscillants secondaires (422) du groupe de bras oscillants secondaires sont mis en rotation par rapport au couvercle d'arbre (41) pour entraîner, au moyen des éléments coulissants (4222) des deux bras oscillants secondaires (422) du groupe de bras oscillants secondaires, la rotation des deux éléments de liaison (423).

6. Structure d'arbre rotatif (40) selon l'une quelconque des revendications 1 à 5, dans laquelle le terminal pliable comprend en outre un écran flexible, situé sur un côté du premier corps (20), de la structure d'arbre rotatif et du second corps (30) ; et
la structure d'arbre rotatif (40) comprend en outre un panneau de porte de support (45), relié de manière fixe au mécanisme rotatif (42) et tournant avec la rotation du mécanisme rotatif (42), et le panneau de porte de support (45) est configuré pour supporter l'écran flexible.

7. Structure d'arbre rotatif (40) selon la revendication 6, dans laquelle lorsque le bras oscillant principal (421) comprend le premier élément oscillant principal (4211) et le second élément oscillant principal (4212), le premier élément oscillant principal (4211) et le second élément oscillant principal (4212) sont chacun pourvus d'un montant de fixation (4213), et le bras oscillant principal (421) est relié au panneau de porte de support (45) au moyen des montants de fixation (4213).

8. Structure d'arbre rotatif (40) selon la revendication 6, dans laquelle un matériau du panneau de porte de support (45) comprend un matériau polymère ultra-élevé, et le panneau de porte de support (45) est formé d'une seule pièce.

9. Structure d'arbre rotatif (40) selon l'une quelconque des revendications 1 à 5, dans laquelle la structure d'arbre rotatif (40) comprend en outre un panneau de porte décoratif (46), relié de manière fixe au mécanisme rotatif (42) et tournant avec la rotation du mécanisme rotatif (42), et le panneau de porte décoratif (46) est configuré pour recouvrir le mécanisme rotatif (42), le mécanisme de synchronisation (43) et/ou le mécanisme d'amortissement (44).

10. Structure d'arbre rotatif (40) selon la revendication 9, dans laquelle lorsque le bras oscillant secondaire (422) comprend l'élément rotatif de bras oscillant (4221) et l'élément coulissant (4222), le panneau de porte décoratif (46) est relié de manière fixe à un côté de l'élément coulissant (4222) orienté à l'opposé de la première saillie (4223), de sorte que le panneau de porte décoratif (46) soit relié de manière fixe au bras oscillant secondaire (422) ; et
deux extrémités opposées du panneau de porte décoratif (46) sont partiellement pliées, une rainure coulissante décorative (463) est formée entre une partie pliée du panneau de porte décoratif (46) et une partie non pliée du panneau de porte décoratif (46), deux extrémités opposées de l'élément de liaison (423) sont chacune pourvues d'une seconde saillie (4241), la seconde saillie (4241) est située dans la rainure coulissante décorative (463), et le panneau de porte décoratif (46) est relié de manière coulissante à l'élément de liaison (423) à travers la rainure coulissante décorative (463).

11. Structure d'arbre rotatif (40) selon la revendication 9, dans laquelle un matériau du panneau de porte décoratif (46) comprend un matériau polymère ultra-élevé, et le panneau de porte décoratif (46) est formé d'une seule pièce.

12. Structure d'arbre rotatif (40) selon la revendication 1, dans laquelle il y a deux arbres à goupille (441), deux engrenages concaves (442), deux premiers ressorts et quatre bras oscillants d'amortissement (444) ;
les deux arbres à goupille (441) sont disposés côte à côte le long d'une première direction, l'arbre à goupille (441) s'étend le long d'une seconde direction, l'engrenage concave (442) a deux trous d'engrenage concave (4421), les deux trous d'engrenage concave (4421) sont disposés côte à côte le long de la première direction, l'engrenage concave (442) est séparément emmanché sur les deux arbres à goupille (441) à travers les deux trous d'engrenage concave (4421), il y a un espace entre les deux engrenages concaves (442), les deux premiers ressorts sont respectivement emmanchés sur les deux arbres à goupille (441) et sont séparément situés dans l'espace entre les deux engrenages concaves (442), les cames rotatives des deux bras oscillants d'amortissement (444) sont disposées au voisinage de l'un des engrenages concaves (442) et sont situées sur un côté de l'engrenage concave (442) opposé au premier ressort le long de la seconde direction, et les cames rotatives des deux autres bras oscillants d'amortissement (444) sont disposées au voisinage de l'autre engrenage concave (442) et sont situées sur un côté de l'engrenage concave (442) opposé au premier ressort le long de la seconde direction ; et
deux parois latérales d'une extrémité de l'élément oscillant (4442) éloignée de la came rotative sont pourvues d'un second montant en saillie (4443), l'élément de connexion (423) est pourvu d'une cinquième rainure de glissement de connexion (4239) adaptée au bras oscillant d'amortissement (444), une paroi latérale de la cinquième rainure de glissement de connexion (4239) est partiellement évidée pour former une seconde rainure (4240) adaptée au second montant en saillie (4443), et le second montant en saillie (4443) est coulissé et pivoté dans la seconde rainure (4240), de sorte que le mécanisme d'amortissement (44) soit relié de manière coulissante et rotative à l'élément de connexion (423), dans lequel
la première direction est une direction allant du premier corps (20) au second corps (30), et la seconde direction est une direction axiale de la structure d'arbre rotatif (40).

13. Structure d'arbre rotatif (40) selon la revendication 12, dans laquelle une partie de connexion (445) est disposée entre deux bras oscillants d'amortissement (444) situés sur le même arbre à goupille (441), et deux extrémités de la partie de connexion (445) sont respectivement reliées de manière fixe aux deux bras oscillants d'amortissement (444).

14. Terminal pliable, dans lequel le terminal pliable est un terminal pliable vers l'extérieur, et le terminal pliable vers l'extérieur comprend la structure d'arbre rotatif (40) selon l'une quelconque des revendications 1 à 13.
